# EUROPEAN PATENT APPLICATION

(11) **EP 3 683 035 A1**
(43) Date of publication of application: **22.07.2020**
(21) Application number: 18856542.8
(22) Date of filing: 12.09.2018
(51) Int. Cl.: B29C 49/42, B29C 49/64, B29C 49/24, B29C 49/00

(54) **APPARATUS FOR MANUFACTURING CONTAINER HAVING THREE-DIMENSIONAL SHAPE**

(30) Priority: 14.09.2017 KR 20170117707
(71) Applicant: Shinwoo Costec Co., Ltd., Siheung-si, Gyeonggi-do 15085 (KR)
(72) Inventor: BYUN, Woo Hong, Gwacheon-si Gyeonggi-do 13836 (KR)
(74) Representative: M. Zardi & Co S.A.
(86) International application number: PCT/KR2018/010675
(87) International publication number: WO 2019/054743

(57) **Abstract**

The present invention relates to a container manufacturing apparatus having three-dimensional shape, and more specifically, to a container manufacturing apparatus capable of quickly manufacturing a container having three-dimensional shape in quantity by using a pre-form manufactured in advance.

The present invention provides an apparatus for manufacturing the container with three-dimensional shape, comprising: a pre-form supply unit for supplying the pre-form manufactured in advance; a pre-form heating unit for heating the pre-form discharged and transferred from the pre-form supply unit; a pre-form discharge unit for discharging, to the outside, the heated pre-form having passed through the pre-form heating unit; a transfer unit for forming a container for transmitting the pre-form discharged from the pre-form discharge unit; a container forming unit, through which the transfer unit for forming a container passes, having a mold which provides an exterior of the container having three-dimensional shape when the heated pre-form transferred by the transfer unit for forming a container expands; an air supply unit, which is provided adjacent to the container forming unit, for providing air to the pre-form accommodated in the mold so that the pre-form expands; a label supply unit, which is provided adjacent to the container forming unit, for supplying a label for inmold labeling to an inside of the mold provided in the container forming unit; and a container withdrawal unit, which is provided adjacent to the container forming unit, for withdrawing, to an adjacent region, the container discharged and transferred from the container forming unit by the transfer unit for forming a container.

## Description

### TECHNICAL FIELD

The present invention relates to a container manufacturing apparatus having three-dimensional shape, and more specifically, to a container manufacturing apparatus capable of quickly manufacturing container having three-dimensional shape in quantity by using a pre-form manufactured in advance.

### BACKGROUND ART

A method of attaching a label with a printed display of a decoration shape, a product name or a description, etc. is widely used as a means of achieving a display of a decoration, a product name or a description on a surface of a synthetic resin blow forming container.

As one of the methods for attaching the label, there is an in-mold forming method, which sets an in-mold forming label (hereinafter referred to as "label") in advance in the mold, and attaches it to a surface of a circumferential wall of a container body simultaneously with molding the container body.

In this in-mold molding method, the label can be attached simultaneously when the injection object container body is molded, and it does not require the attachment work by another dedicated process; since no step is generated between the surface of the container body and the label, there is no concern of appearance deterioration or touch deterioration by the steps; and regardless of the thinning of the blow molded container, the label can be firmly and stably attached to the container body.

As an example, Japanese Patent Laid-open Publication No. 2004-136486 describes an invention about a label, a blow molded product with a label, and its manufacturing method.

However, in the case of the in-mold forming according to the conventional technology, the injection object before the shape of the container is formed (hereinafter referred to as "pre-form") is formed, and forming a container by heating and expanding the pre-form, labeling, withdrawing the container should be made. It causes a lot of problems, such as large space for a layout of devices for each of these work stages and inefficiency due to a low speed.

In addition, the conventional in-mold forming device has another problem because of its hydraulic design that a workplace can be contaminated due to oil leakage, etc., and that the container also can be contaminated during a manufacturing process.

### DISCLOSURE

### TECHNICAL PROBLEM

The object of present invention is to solve these problems and to provide a manufacturing apparatus capable of quickly producing the containers having three-dimensional shape in quantity by using a pre-form manufactured in advance.

In addition, present invention can improve a working environment and a hygiene state of a container by performing an operation control of the manufacturing apparatus of a container having three-dimensional shape using an electric motor without using the hydraulic machine.

### TECHNICAL SOLUTION

The present invention to achieve such objectives provides an apparatus for manufacturing the container with three-dimensional shape, comprising: a pre-form supply unit for supplying the pre-form manufactured in advance; a pre-form heating unit for heating the pre-form discharged and transferred from the pre-form supply unit; a pre-form discharge unit for discharging, to the outside, the heated pre-form having passed through the pre-form heating unit; a transfer unit for forming a container for transmitting the pre-form discharged from the pre-form discharge unit; a container forming unit, through which the transfer unit for forming a container passes, having a mold which provides an exterior of the container having three-dimensional shape when the heated pre-form transferred by the transfer unit for forming a container expands; an air supply unit, which is provided adjacent to the container forming unit, for providing air to the pre-form accommodated in the mold so that the pre-form expands; a label supply unit, which is provided adjacent to the container forming unit, for supplying a label for in-mold labeling to an inside of the mold provided in the container forming unit; and a container withdrawal unit, which is provided adjacent to the container forming unit, for withdrawing, to an adjacent region, the container discharged and transferred from the container forming unit by the transfer unit for forming a container.

The pre-form supply unit comprises: a bucket unit for accommodating the pre-form manufactured outside; a first transfer unit for supplying the pre-form, which is connected to the bucket unit, for transferring upwardly the pre-form supply unit accommodated in the bucket unit; a second transfer unit for supplying the pre-form, which is provided adjacent to the first transfer unit for supplying the pre-form, for transferring the pre-form to the pre-form heating unit; a first rotary transfer unit, which is rotatably provided at a discharge unit of the second transfer unit for supplying the pre-form, having a space unit into which the pre-form is fitted; and a second rotary transfer unit, which is provided adjacent to the first rotary part, for transferring the pre-form transferred by the first rotary transfer unit into a direction of the pre-form heating unit.

The pre-form heating unit comprises a heater; wherein the apparatus further comprises a transfer unit for the pre-form heating unit, which passes between the pre-form heating unit; wherein the second rotary transfer unit is disposed next to the transfer unit for heating the pre-form; and wherein the pre-form discharged from the second rotary transfer unit is transferred by the transfer unit for the pre-form heating unit and transferred and heated by the pre-form heating unit, and then passes the pre-form heating unit and moves to a direction of the pre-form discharge unit.

The transfer unit for the pre-form heating unit is provided inside the pre-form heating unit, next to the second rotary transfer unit, and in a form of circulating while passing through the pre-from discharge unit; and wherein the transfer unit for the pre-form heating unit is provided in a separate and independent form to be distinguished from the transfer unit for forming a container.

The pre-form discharge unit is provided between the transfer unit for the pre-form heating unit and the transfer unit for forming a container; and the pre-form discharge unit further comprises: a pre-form holding unit for holding the pre-form displaced in the transfer unit for the pre-form heating unit; and a guide unit for guiding the pre-form held by the pre-form holding unit into a direction of the transfer unit for forming a container.

The guide unit is provided in plural, and wherein a distance between the guide units is widened from the transfer unit for the pre-form heating unit to the transfer unit for forming a container.

The transfer unit for forming a container is provided next to the pre-form discharge unit, and in a form of circulating while passing through the container forming unit and the container withdrawal unit; and wherein the transfer unit for forming a container is provided in a separate and independent form to be distinguished from the transfer unit for the pre-form heating unit.

The transfer unit for the pre-form heating unit comprises a pre-form inlet support unit for allowing an inlet of the pre-form to be displaced downward.

The transfer unit for forming a container comprises an inlet support unit for allowing an inlet of the pre-form and an inlet of a container to be displaced downward, the inlet support unit having an opening for supplying air from the air supply unit.

The first transfer unit for supplying the pre-form comprises a first housing formed upwardly and a conveyor belt, which is provided in the first housing, having a protruding support unit on which the pre-form can be mounted; and wherein the second transfer unit for supplying the pre-form comprises: a second housing, which is disposed under a discharge unit of the first housing, extending into a direction of the pre-form heating unit; a guide rail, which is provided at a discharge unit of the second housing, extending downward into a direction of the first rotary transfer unit; and a rotating device, which is provided to be rotatable in the second housing, for transferring the pre-form into a direction of the guide rail.

### ADVANTAGEOUS EFFECTS

According to the present invention, it is possible to quickly manufacture a container in large quantity, particularly the in-mold label container with three-dimensional shape, by supplying a large amount of pre-forms manufactured in advance.

An inlet of the pre-form is not placed to face up as in the conventional technology but to face down, and an inlet support unit is not placed above the preform PF but below the preform PF so that the heat is directed upwards, which prevents the inlet support unit from being damaged by heat.

Meanwhile, a position of the pre-form can be easily reversed because the position of the pre-form in which its inlet faces upward is reversed to downward by a first and second rotary transfer units.

When a container is formed, the container can be quickly cooled because not only a hot air for inflation but also a cooling air for cooling are supplied.

### DESCRIPTION OF DRAWINGS

FIG. 1 a plan view of manufacturing apparatus of a container having three-dimensional shape according to the present invention.
FIGS. 2 and 3 are perspective views of a manufacturing apparatus of a container having three-dimensional shape according to the present invention;
FIG. 4 is a partial perspective view of a manufacturing apparatus of a container having three-dimensional shape according to the present invention;
FIG. 5 is a perspective view of a first and a second rotary transfer units according to the present invention;
FIG. 6 is a perspective view of a pre-form heating unit and a pre-form discharging unit according to the present invention;
FIG. 7 is a perspective view of a pre-form discharging unit according to the present invention;
FIG. 8 is a perspective view of a container forming unit, a label supply unit, and a container withdrawal unit according to the present invention;
FIGS. 9 and 10 are assembly exploded views of a container forming unit and a label supply unit to be applied to the present invention;
FIGS. 11 and 12 are perspective views illustrating the state in which molds are spaced apart from each other in a container forming unit according to the present invention;
FIGS. 13 and 14 are perspective views illustrating a state in which molds are stuck to each other in a container molding part according to the present invention;
FIG. 15 a diagram illustrating a state of a locking device when molds are spaced apart from each other in the present invention;
FIG. 16 a diagram illustrating a state of a locking device when the molds are stuck together in the present invention;
FIG. 17 is a partial perspective view illustrating that a label is attached to and supported on an inner surface of a mold cavity in a state in which a mold of the container forming unit applied to the present invention is separated, and a pre-form is located between cavities;
FIG.18 is a perspective view of a label supply part applied to the present invention;
FIG. 19 is a perspective view illustrating a state where a label supply arm is lowered in the label supply part applied to the present invention;
FIG. 20 is a perspective view illustrating a state in which a first moving frame is moved to an uppermost end of a first moving guide in order to take an additional label from a label receiving unit in a label supply unit applied to the present invention;
FIG. 21 is a perspective view illustrating that a label is moved to a label support unit from a label receiving unit of the label supply unit applied to the present invention;
FIGS. 22 and 23 are perspective views illustrating a ready state before a label is attached to a mold;
FIGS. 24 and 25 are perspective views illustrating a state in which a label is being attached to a mold;
FIG. 26 is a perspective view illustrating a state in which a label has been attached to the mold;
FIG. 27 is a perspective view illustrating a state before air is supplied by an air supply unit applied to the present invention;
FIG. 28 is a front view illustrating a state in which air is supplied by an air supply unit applied to the present invention;
FIG. 29 is a perspective view illustrating a state where a pre-form is located in a mold cavity of a container forming unit applied to the present invention;
FIG. 30 is a schematic diagram illustrating a process of molding a container by a container forming unit and an air supply unit according to the present invention;
FIG. 31 is a perspective view illustrating a state in which a container withdrawal unit has taken out a container according to the present invention;
FIG. 32 is a perspective view of a container withdrawal unit and a conveyor belt for withdrawing a container according to the present invention;
FIG. 33 a diagram sequentially illustrating an operation of a container withdrawal unit in sequence according to the present invention; and
FIG. 34 is a perspective view illustrating a state in which a container withdrawal unit has withdrawn a container and transfer it to a conveyor belt according to the present invention.

### MODE FOR THE INVENTION

As the present disclosure allows for various changes and numerous embodiments, particular embodiments will be illustrated in the drawings and described in detail in the written description.

However, this is not intended to limit the present disclosure to particular modes of practice, and it is to be appreciated that all changes, equivalents, and substitutes that do not depart from the spirit and technical scope of the present disclosure are encompassed in the present disclosure.

The terms such as "first" and "second" are used herein merely to describe a variety of constituent elements, but the constituent elements are not limited by the terms.

The terms are used only for the purpose of distinguishing one constituent element from another constituent element.

For example, a first element may be termed a second element and a second element may be termed a first element without departing from the teachings of the present disclosure.

As used herein, the term "and/or" includes any and all combinations of one or more of the associated listed items.

It will be understood that when an element, such as a layer, a region, or a substrate, is referred to as being "on", "connected to" or "coupled to" another element, it may be directly on, connected or coupled to the other element or intervening elements may be present.

In contrast, when an element is referred to as being "directly on," "directly connected to" or "directly coupled to" another element or layer, there are no intervening elements or layers present.

The terms used herein is for the purpose of describing particular embodiments only and is not intended to be limiting of the present disclosure.

The singular forms "a," "an" and "the" are intended to include the plural forms as well, unless the context clearly indicates otherwise.

It will be further understood that the terms "comprises" or "comprising" when used in this specification, specify the presence of stated features, integers, steps, operations, elements, or components, but do not preclude the presence or addition of one or more other features, integers, steps, operations, elements, components, or groups thereof.

Hereinafter, the present disclosure will be described in detail by explaining exemplary embodiments of the invention with reference to the attached drawings. The same reference numerals in the drawings denote like elements, and a repeated explanation thereof will not be given.

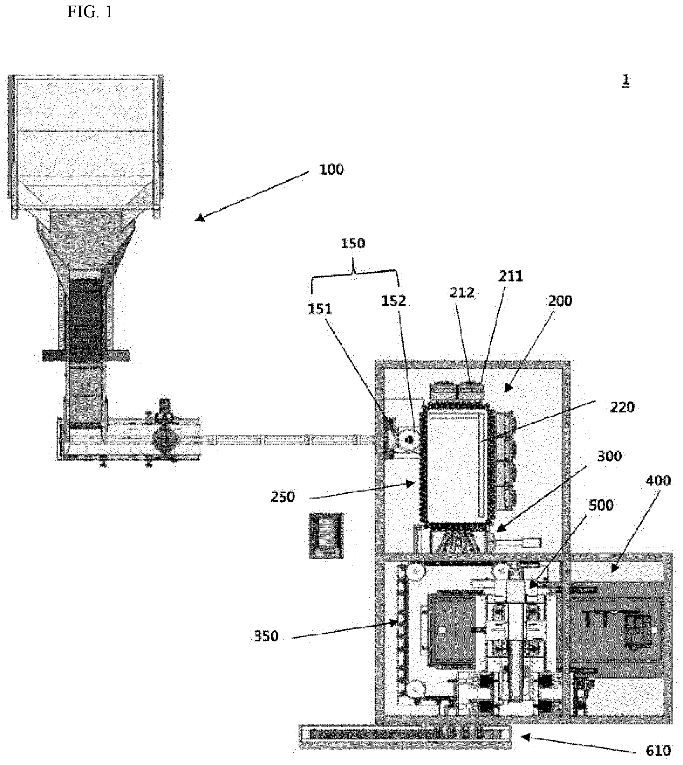

As shown in FIGS. 1 to 3, a manufacturing apparatus of a container (hereinafter referred to as a "container manufacturing apparatus") 1 having three-dimensional shape according to the present invention is provided to heat a pre-form that has already been manufactured from outside, mold a container having three-dimensional shape through a blowing work to the heated pre-form, and withdraw the container having a molded three-dimensional shape to the outside.

The container manufacturing apparatus according to the present invention is largely divided into four units. That is, a pre-form supply unit 100 for receiving and supplying the pre-form manufactured in advance from the outside, a pre-form heating unit 200 for heating the pre-form supplied from the pre-form supply unit 100, and a pre-form forming unit 400 for forming the container having three-dimensional shape from the pre-form heated at the pre-form heating unit 200 by using molding and blowing process, and a container withdrawal unit 610 for withdrawing the container formed by the container forming unit to the outside.

The pre-form supply unit 100 adjacent to the pre-form heating unit 200 comprises a first and a second rotary transfer units 151 and 152 that transfer the pre-form to the pre-form heating unit 200.

The transfer unit 250 for the pre-form heating unit that transfers the pre-form transferred by the second rotary transfer unit 152 to the direction of the pre-form heating unit 200 is further provided.

The transfer unit 250 for the pre-form heating unit comprises a transfer device that circulates, which is provided as a separate transfer device from ad transfer unit 350 for forming a container that pass through the container forming unit to be described later.

The pre-form heating unit 200 is placed along a part of the area of the transfer unit 250 for the pre-form heating unit, heats the pre-form that is previously manufactured, and facilitates expansion during a blowing forming process.

To this end, the pre-form heating unit 200 is placed along the outer side of the pre-form transfer unit. Meanwhile, a reflection plate 220 may be provided inside the transfer unit 250 for the pre-form heating unit.

The pre-form heating unit 200 comprises a heating unit housing 211 and a plurality of heaters 212 provided inside the heating unit housing 211.

Meanwhile, a pre-form discharging unit 300 is provided between the transfer unit 250 for the pre-form heating unit and the transfer unit 350 for forming a container.

The pre-form discharging unit 300 serves to take the pre-form heated by the pre-form heating unit 200 and transfer the pre-form to a direction of the transfer unit 350 for forming a container. This will be described in detail later.

Meanwhile, the transfer unit 350 for forming a container is provided in a circulation structure separately from the transfer unit 250 for the pre-form heating unit and passes through a container forming unit 400 and a container extraction unit 610.

The transfer unit 350 for forming a container is provided with an inlet support unit 351 to support an inlet of the pre-form and the container, and an opening (not shown) is provided at the inlet support unit 351, respectively, so that the air can be injected from an air supply unit as described below.

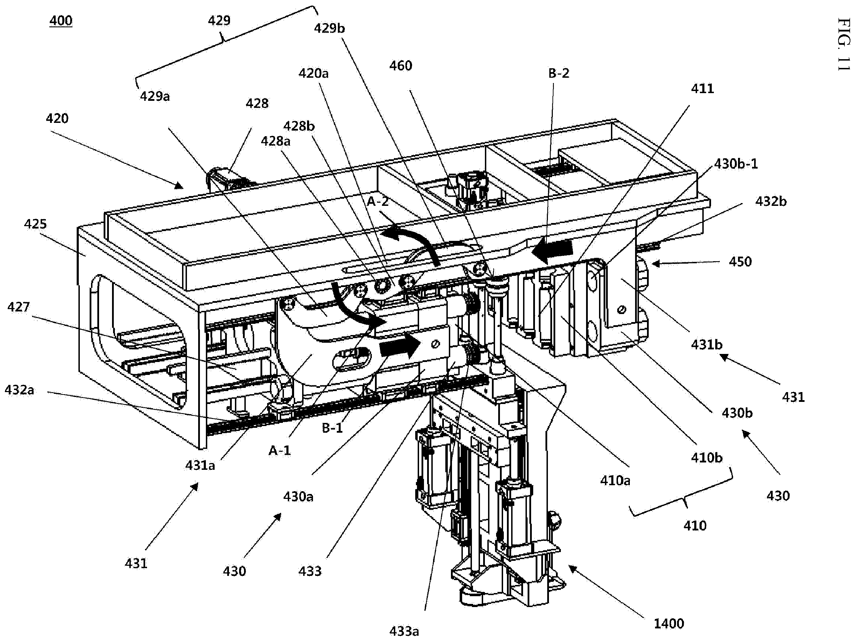

The container forming unit 400 comprises the mold 410 (*see* FIG. 11) that are separated according to the shape of a container and a mold driving part 428 (*see* FIG. 11) to drive the mold.

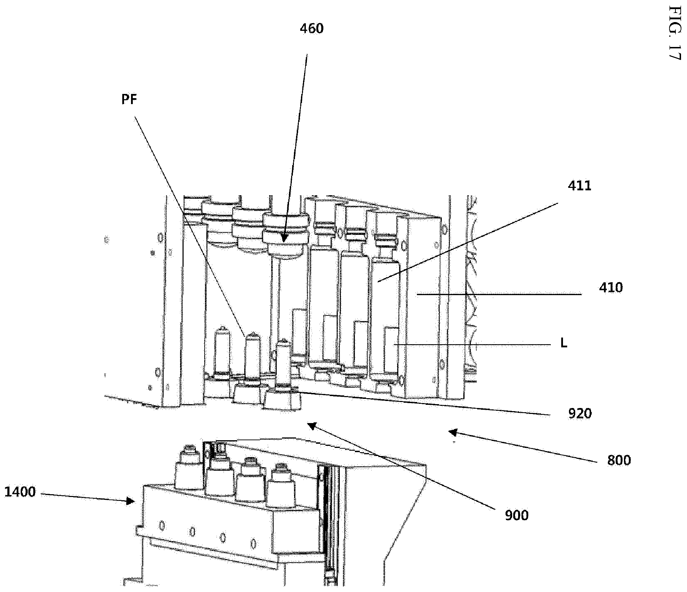

The label supply unit 500 is provided for supplying the label for the in-mold label process inside the mold 410 at the upper part of the container forming unit 400 and an air supply unit 1400 (*see* FIG. 17) is provided under the container forming unit 400.

The container withdrawal unit 610 for withdrawing the completed container to the outside at a slightly away from the container forming unit 400.

The container withdrawal unit 610 is provided in the form of a finger and serves to withdraw the completed container transferred through the transfer unit 350 for forming a container to an external conveyor belt or box.

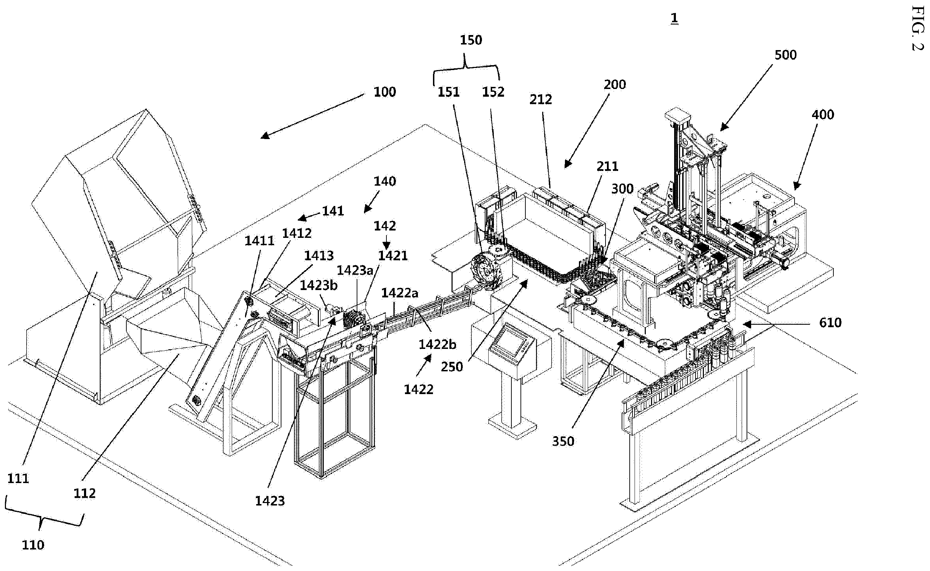

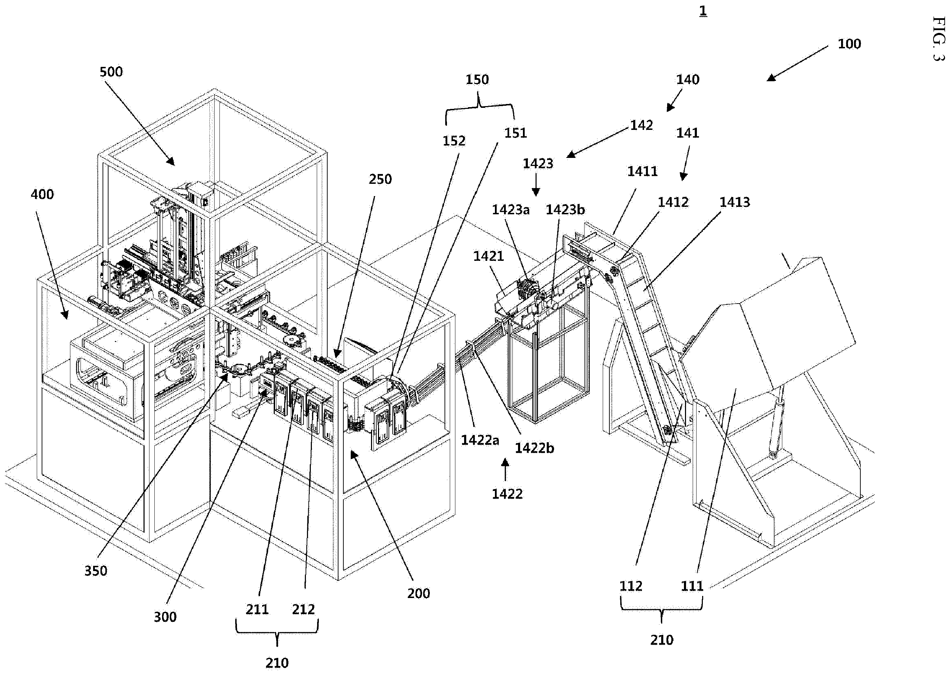

As shown in FIGS. 2 and 3, the pre-form supply unit 100 of the container manufacturing apparatus 1 according to the present invention includes a bucket unit 110 where the pre-forms provided from the outside are stacked and accommodated.

The bucket unit 110 is capable of rotating again, so that the rotating motion can pour out the pre-forms stacked therein. It comprises a first bucket unit 111 which is provided with an openable door at its exit and the second bucket unit 112 which is provided at a lower part than the first bucket unit 111 and accommodates the pre-forms poured out of the first bucket unit 111.

The pre-forms in the first bucket unit 112 are transferred to the transfer unit 250 for the pre-form heating unit by the transfer units 140, 150 for supplying the pre-form.

The transfer units 140, 150 for supplying the pre-form are connected to the bucket unit 110 again. The transfer units 140, 150 for supplying the pre-form comprise a first transfer unit 141 for supplying the pre-form, which transfers the pre-form contained in the bucket unit 110 upward, and a second transfer unit 142 for pre-form supply 142 that moves the pre-form to a direction of the pre-form heating unit 200.

The first transfer unit 141 for supplying the pre-form comprises a first housing 1411 formed to be upwardly and a conveyor belt 1413 having the protruding support 1412 on which the pre-form can be mounted in the first housing 1411.

The second transfer unit 142 for supplying the pre-form is placed under a discharge unit of the first housing 1411. It comprises a second housing 1421 extending into a direction of the pre-form heating unit 200, a guide rail 1422 extending downward into a direction of the first rotary transfer unit 151, and a rotating device 1423 provided to be rotatable in the second housing 1421 to transfer the pre-form into a direction of the guide rail 1422.

The second housing 1421 and the guide rail 1422 are both placed downward.

The rotating device 1423 comprises a rotating body 1423a for contacting a surface of the pre-form and forcibly transferring the pre-form into a direction of the guide rail and a rotating motor 1423b provided on one side of the rotating body 1423a to rotate the rotating body 1423a.

The guide rail 1422 comprises the rail bar 1422a that is long formed and spaced apart from each other and a rail bar support unit 1422b that surrounds and supports a part of the rail bar 1422a.

Here the pre-form is inserted in an apart space of the upper part of the rail bar 1422a, which is an inlet, and guided by the rail bar 1422a and transferred to the first rotary transfer unit 151.

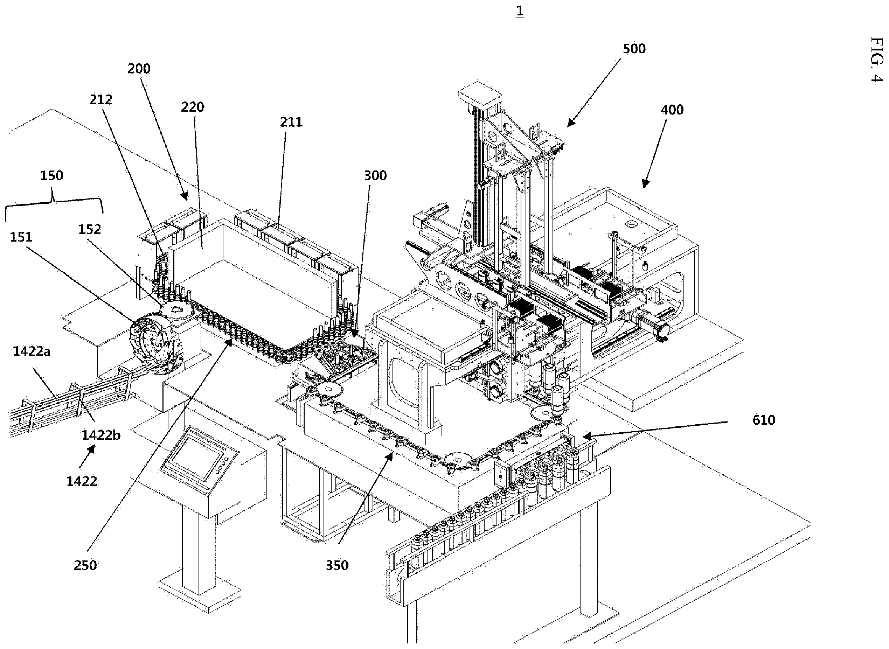

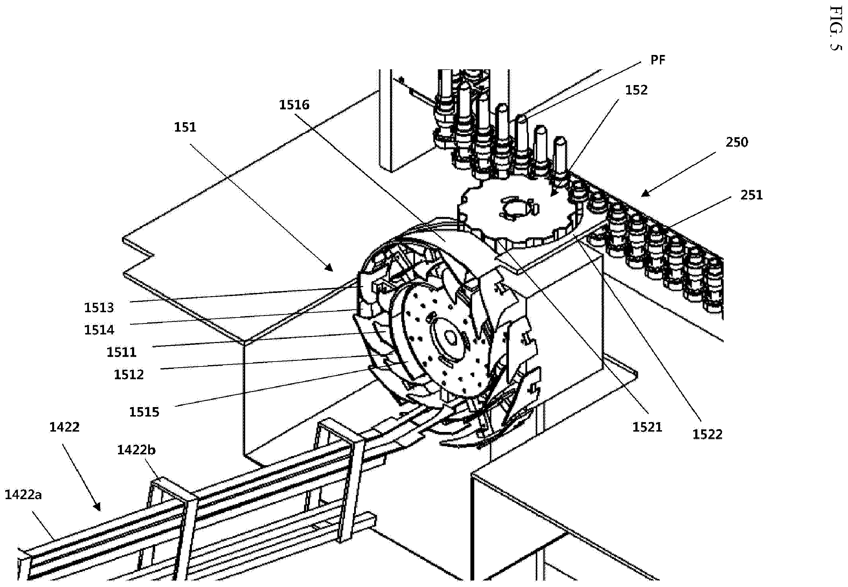

As shown in FIGS. 4 and 5, the rotary transfer unit 150 is placed next to the first rotary transfer unit 151 that is directly adjacent to the guide rail 1422 again and the second rotary transfer unit 152 having the rotary axis orthogonal to the rotary axis of the first rotary transfer unit 151.

The first rotary transfer unit 151 comprises a plurality of inner blades 1511 spaced apart from each other and a plurality of outer blades 1513 spaced apart from each other while radially spaced apart outward from the inner blades 1511.

The first accommodating groove 1512 is provided between the inner blades 1511, and the second accommodating groove 1514 is provided between the outer blades 1513.

The inlet parts of the first and second accommodation grooves 1512, 1514 are formed to be inclined and flat inward, which is to stably accommodate the pre-form that are accommodated into the first and second accommodation grooves 1512, 1514 after being discharged from the guide rails 1422.

Meanwhile, the inner guide plate 1515 having an arc or curved shape is provided inside the inner blade 1511, and the outer guide plate 1516 having an arc or curved shape is provided outside the outer blade 1513.

The inner guide plate 1515 serves to prevent the pre-forms, which are accommodated in the first and second accommodating grooves 1512, 1514, from falling out toward the center of rotation of the first rotary transfer unit 151 and the outer guide plate 1516 serves to prevent the pre-form accommodated in the first and second accommodation grooves 1512, 1514 from falling out of the first rotary transfer unit 151 in the radially outward direction.

Here, the first rotary transfer unit 151 rotates in a clockwise direction, and transfers the pre-form discharged from the guide rail 1422 into the direction of the second rotary transfer unit 152.

A third receiving groove 1521, which is tooth-like, is formed on an outer circumferential surface of the second rotary transfer unit 152.

The pre-forms transferred by the first rotary transfer unit 151 are inserted into the third accommodating groove 1523 of the second rotary transfer unit 152 to be moved into a direction of the transfer unit 250 for the pre-form heating unit.

Here, the second rotary transfer unit 152 is desirable to rotate in a counterclockwise direction.

The guide unit 1522 having a curved surface on an inner surface of the second rotary transfer unit 152 is provided to move the pre-forms inserted into the third accommodating groove 1521 to the transfer unit 250 for the pre-form heating unit without deviating the pre-forms to the outside.

The pre-forms transferred along the guide rail 1422 are moved with their inlets upward, and their positions are maintained at the lower end of the first rotary transfer unit 151.

However, while the first rotary transfer unit 151 is rotated in the clockwise direction, an inlet of the pre-form is downward at the highest point of the first rotary transfer unit 151. The pre-forms are moved to the second rotary transfer unit 152 in that state, and then moved to the transfer unit 250 for the pre-form heating unit by the second rotary transfer unit 152 with the inlet downward.

The pre-forms with the inlet facing downward are inserted into the inlet support 251 provided in the transfer unit 250 for the pre-form heating unit and are transferred to the pre-form heating unit 200 with upside down position.

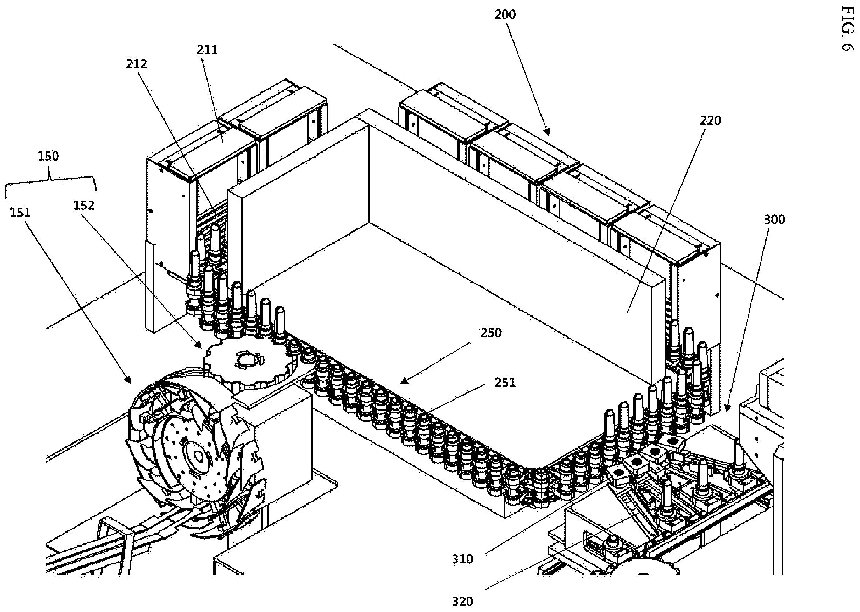

As shown in FIG. 6, the pre-form heating unit 200 comprises the heating unit housing 211 partially placed outside the transfer unit 250 for the pre-form heating unit, a heater 212 installed in the heating unit housing 211, and a reflection plate 220 located in an opposite side (inside the transfer unit for the pre-form heating unit).

In FIG. 6, the arrangement of the pre-form heating unit 200 is shown as being bent in the form of ' 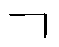 ', but is not limited thereto. In addition, the heating unit housing 211 and the heater 212 may be further placed at the position where reflecting plate 220 is located.

The transfer unit 250 for the pre-form heating unit is provided in a form of a circulating conveyor, and a plurality of inlet supports 251 supporting the inlet of the pre-form are continuously placed.

Surfaces of the pre-forms which have passed through the pre-form heating unit 200 by the transfer unit 250 for the pre-form heating unit are heated to be in a plastic state.

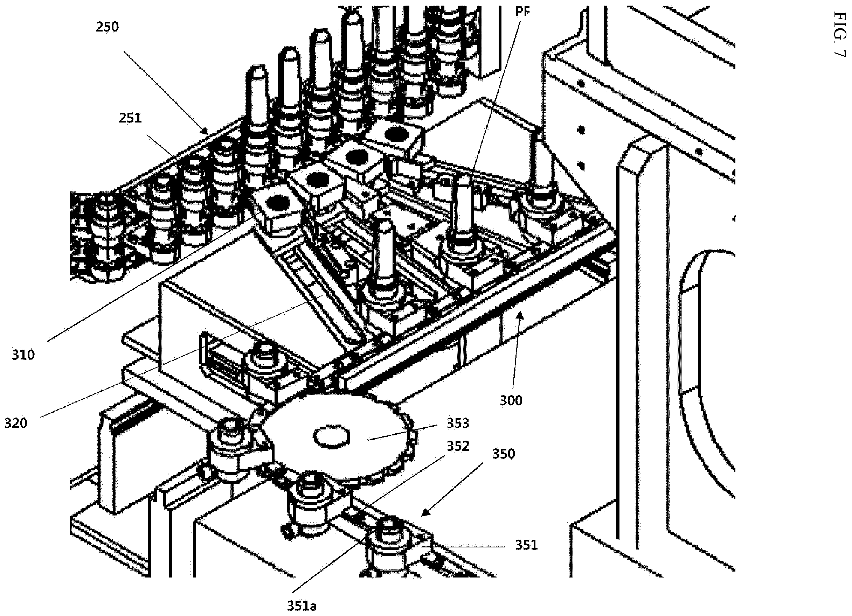

When passing by the pre-form discharging unit 300 in this state, the pre-form holding unit 310 comprising the pre-form discharging unit 300 shown in FIG. 7 moves into a direction of the transfer unit 250 for the pre-form heating unit to take the pre-forms out of the transfer unit 250 for the pre-form heating unit.

Although not shown in the pre-form holding unit 310, it has a structure like an arm to hold the pre-forms in the transfer unit 250 for the pre-form heating unit, and rotate them thereafter.

Then, the heated pre-form held by the pre-form holding unit 310 moves along the direction of the guide unit 320 in the form of the rail extending into the direction of the container molding transfer unit. The guide unit 320 also constitutes the pre-form discharging unit 300 together with the pre-form holding unit 310.

Specifically, the pre-form holding unit 310 moves along the guide unit 320 to place the pre-form in the transfer unit 350 for forming a container and then returns to transfer unit 250 for the pre-form heating unit.

The transfer unit 350 for forming a container has a circulation structure like the transfer unit 250 for the pre-form heating unit and passes through the pre-form discharging unit 300, the container forming unit 400, and the container withdrawal part 610.

However, it has an independent circulation structure separately from the transfer unit 250 for the pre-form heating unit.

It is desirable for the intervals of the guide unit 320 to be wider from the transfer unit 250 for the pre-form heating unit to the transfer unit 350 for forming a container.

In the case of the transfer unit 250 for the pre-form heating unit, since only the surface of the pre-form needs to be heated without the volume of the pre-form being expanded, the spacing of the inlet support 251 should be tight so that it can heat more pre-forms in the narrow area.

However, in the case of the transfer unit 350 for forming a container, since the pre-form should be expanded to be a container in the container forming unit, the intervals should be widened in advance. Therefore, in consideration of the change in the intervals, it is desirable that the interval of the guide unit 320 becomes wider from the transfer unit 250 for the pre-form heating unit to the transfer unit 350 for forming a container.

A plurality of pre-forms (e.g., 4) are simultaneously discharged from the transfer unit 250 for the pre-form heating unit by the pre-form discharging unit 300 and are placed at the inlet support unit 351 of the transfer unit 350 for forming a container. Even in this state, the pre-form maintains the upside down position.

The transfer unit 350 for forming a container comprises a circulation line 352 and an inlet support part 351 coupled to the circulation line to be spaced apart from each other. The inlet support part 351 is formed with the opening 351a in an up-down direction so that air can flow in and out in that direction. In addition, the transfer unit 350 for forming a container comprises the rotation operation part 353 which moves the circulation line 352 injunction with it.

The circulation line 352 is designed to pass through the front of the guide unit 320. The guide unit 320 and the inlet support unit 351 do not interfere as the inlet support unit 351 coupled to the circulation line 352 is placed higher than the height of the guide unit 320.

Accordingly, the pre-form conveyed by the pre-form holding unit 310 can be smoothly positioned from the transfer unit 250 for the pre-form heating unit to the inlet support part 351.

Here, it is desirable that the circulation line 352 is composed of a continuous body such as a circulation chain or a circulation conveyor belt.

The rotary operation unit 353 is desirable to be in a form of teeth on the outer surface, such as gears or sprockets. It is also desirable that a separate motor is provided for the rotary operation unit 353.

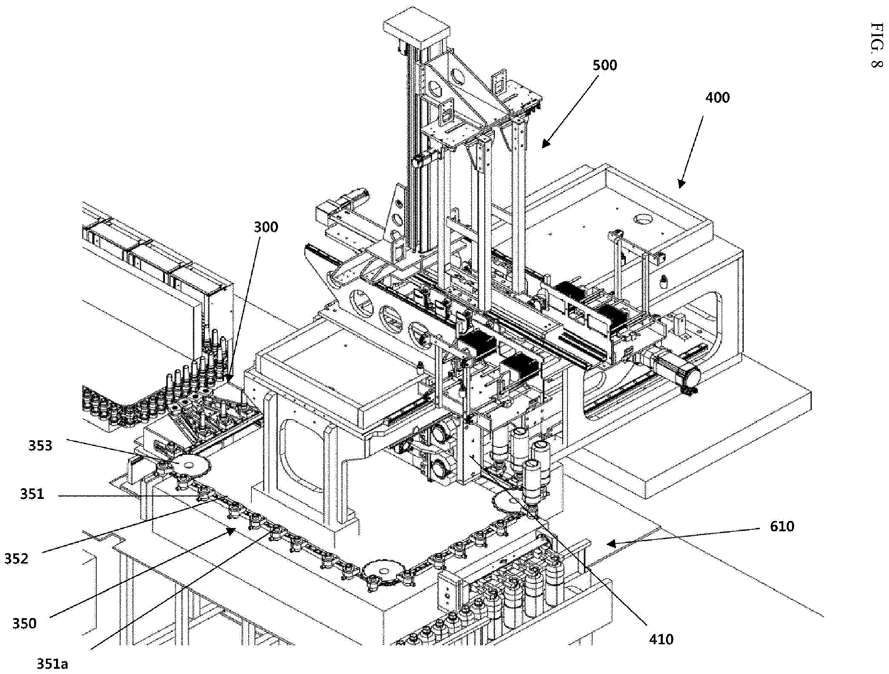

As shown in FIG. 8, the transfer unit 350 for forming a container passes through the container forming unit 400.

The container forming unit 400 is separated from each other and comprises a mold 410 having a cavity with a shape of the container and the components for driving the mold.

An air supply unit 1400 is provided under the container forming unit 400, more precisely, at the lower part of the mold 410 and injects air into the pre-form inside the cavity to form the container while the mold is closed.

The label supply unit 500 is provided at the upper side of the container forming unit 400 for supplying the label for the in-mold labeling process on the inner surface of the cavity.

When the container is completed in the container forming unit 400, the container is released out of the container forming unit 400 by the transfer unit 350 for forming a container. Then, the container is withdrawn by the container withdrawal part 610 to the outside and separated from the transfer unit 350 for forming a container and moved to the neighboring conveyor belt or box.

Hereinafter, the container forming unit 400, the label supply unit 500, an air supply unit 1400, and the container withdrawal unit 610 will be described.

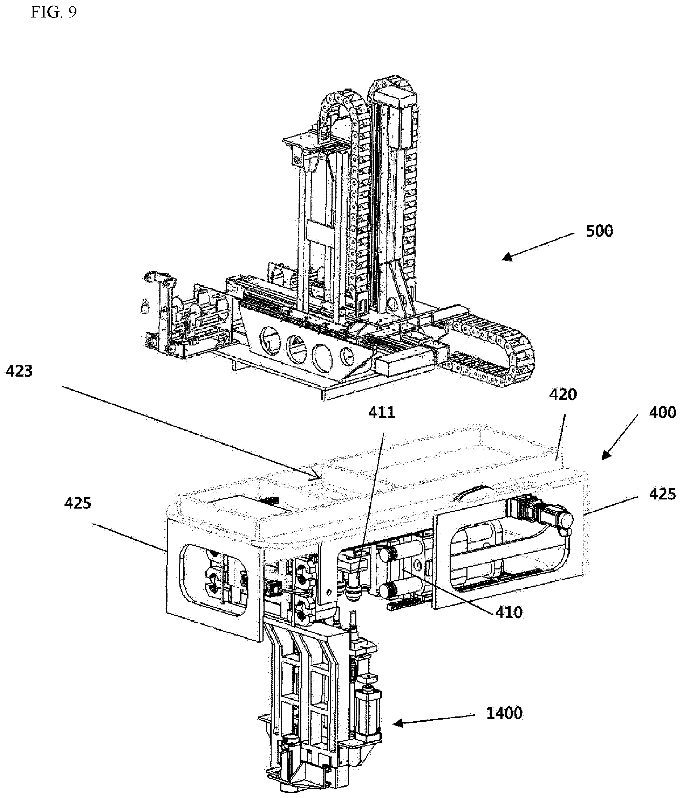

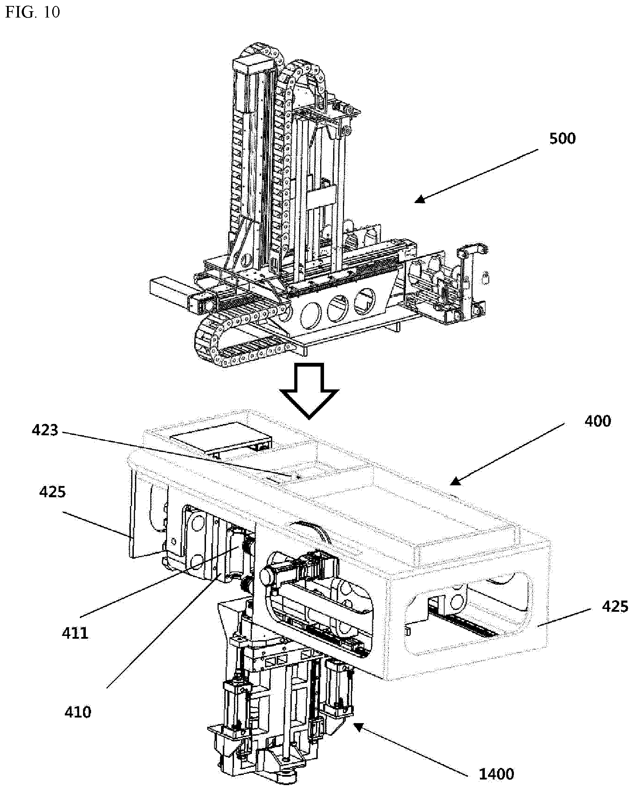

As shown in FIGS. 9 and 10, a label supply unit 500 is placed in an arrangement space 423 on the container forming unit 400.

The container forming unit 400 and the label supply unit 500 may be collectively referred to as the in-mold label container molding assembly.

As shown in FIGS. 9 to 12, the container forming unit 400 has a mold 410 with the cavity 411 having the shape corresponding to the external appearance of the container to be finally completed.

The mold 410 may be divided into two parts.

A housing frame 420 constitutes a skeleton of the container forming unit 400. A side plate 425 is provided on the side of the housing frame 420.

The mold 411 is divided into a first mold 411a and a second mold 411b.

A moving block 430 is provided behind each mold.

A first moving block 430a is provided behind the first mold 411a, and a second moving block 430b is provided behind the second mold 411b.

Meanwhile, a support block 427 supporting a rear of the first moving block 430a is provided behind the first moving block 430a.

A mold driving unit 428 is provided next to the housing frame 420.

One of the features of the present invention is that the two molds 411 can be attached or spaced apart from each other by using one mold driving unit 428.

In the conventional technology, two mold driving units should be provided to separate or attach two molds. However, in the present invention, one mold driving unit 428 can move two molds 411 at the same time.

The above driving mechanism is implemented by the following unique driving force transmission structure.

The mold driving unit 428 is provided with a rotation shaft 428a penetrating the housing frame 420 in the width direction.

The rotating shaft 428a is provided with a rotating part 428b in a form of the cam plate.

Two connecting links 429 are provided at both ends of the rotating part 428b, and the connecting links 429 are connected to the two moving blocks 430a, 430b by the connecting plate 431, respectively.

Specifically, the first connection link 429a with a ' 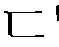 ' shape is rotatably connected to one end of the rotation part 428b.

The first connection link 429a is rotatably connected to the first connection plate 431 with a ' 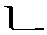 ' shape.

The first connection plate 431a is connected to the first moving block 430a.

On the other hand, the other end of the rotating part 428b is rotatably connected to the second connection link 429b of the ' 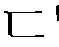 ' shape.

The second connection link 429b is rotatably connected to the second connection plate 431b with a ' 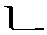 ' shape.

The second connecting plate 431b is connected to the second moving block 430b.

It is desirable for the first connecting link 429a to have a structure composed of two layers spaced apart from each other so that it can prevent interference with the first connecting plate 431a and the rotating part 429 and secure the stable connection state and the power transmission state.

It is also desirable for the second connecting link 429b to have a structure composed of two layers spaced apart from each other so that it can prevent interference with the first connecting plate 431b and the rotating part 429 and secure the stable connection state and the power transmission state.

That is, one plate constituting the first connection link 429a is coupled to one surface of the rotating part 429 and the first connection plate 431a, and the other plate is coupled to the other surface.

One plate constituting the second connection link 429a is coupled to one surface of the rotating part 429 and the second connection plate 431b and the other plate is coupled to the other surface.

By this way, the first connection link 429a and the second connection link 429b can prevent interference with the first connection plate 431a (or the first connection plate 431b) during the rotational movement by the rotating part 429.

A groove part 420a for securing a moving space of the second connection link 429b on the upper surface of the housing frame 420 is provided.

In addition, a first guide rail 432a is provided under the housing frame 420 to guide the movement of the first moving block 430a.

And a second guide rail 432b is provided on the upper of the housing frame 420 to guide the movement of the second moving block 430b.

A fixing bar 433 penetrating the first moving block 430a is placed.

One end of the fixing bar 433 is fixed to the support block 427 and extends into the direction of the first moving block 430a to pass through four corner parts of the first moving block 430a.

The other end of the fixing bar 433 protruding therethrough is provided with a first locking unit 433a formed of a plurality of concave and convex portions or steps.

The above-mentioned connecting components (a rotating unit, a connecting link, a connecting plate, a fixing bar, a guide rail) are placed on both sides of the housing frame 420.

Insertion holes 430b-1 through which the fixing bars 433 are pierced at the four corners of the second moving block 430b are provided.

A locking device 450 coupled to the first locking unit 433b at the rear of the second moving block 430b is provided for the case the first locking unit 433b is exposed when the fixing bar 433 penetrates the insertion hole 430b-1.

When the first mold 410a and the second mold 410b maintain to be in contact with each other, the locking device 450 and the first locking unit 433b are coupled to each other.

In this case, the air is introduced from the outside for molding the container while the pre-form is inside the first mold 410a and the second mold 410b. In this case, the locking device 450 is coupled to the first locking unit 433a to prevent any gap between the molds.

The process of closing the two molds 410a, 410b is as follows.

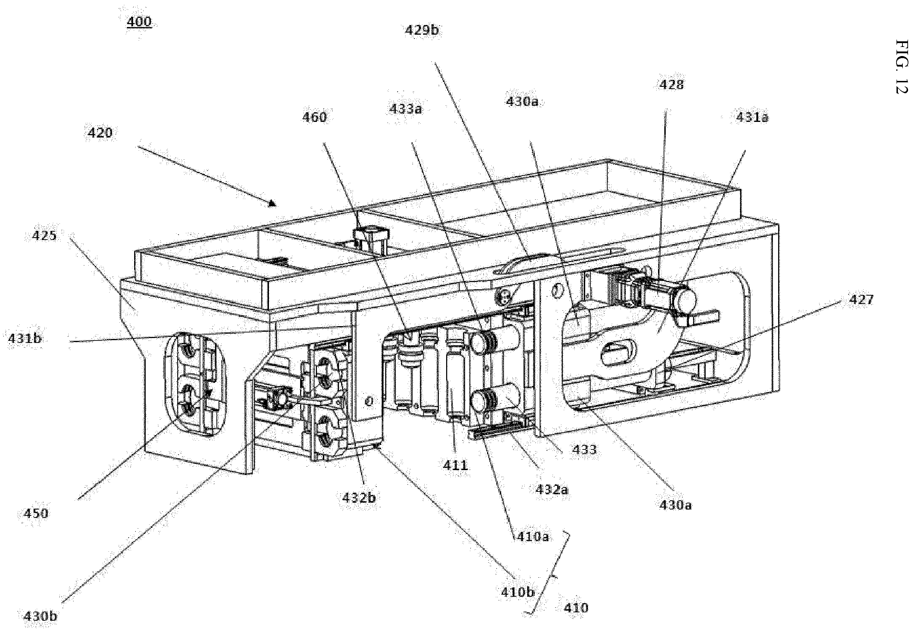

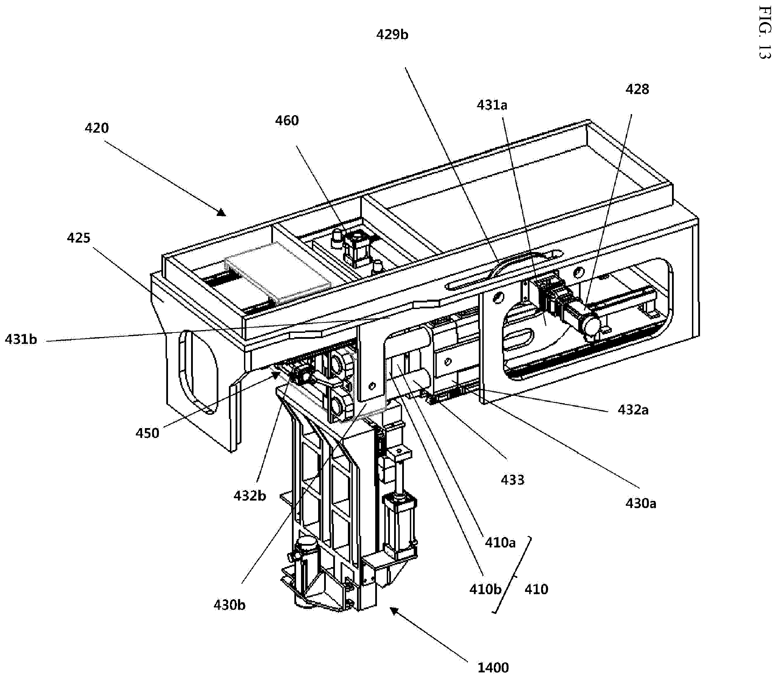

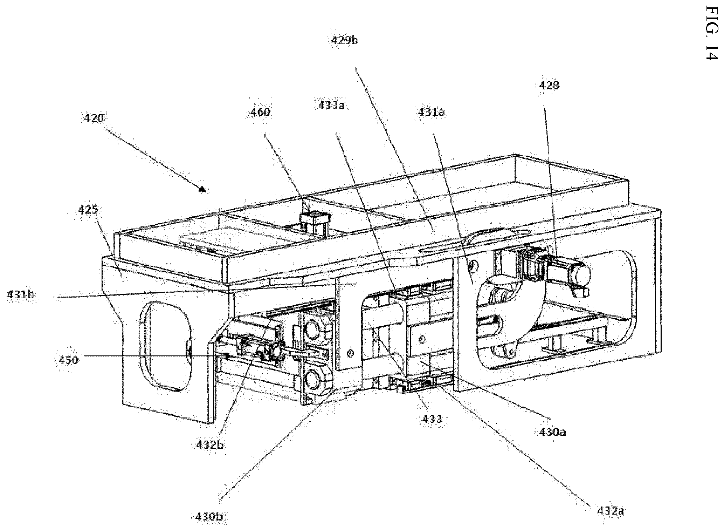

FIGS. 11 and 12 show a gap between the first and second molds 410a, 410b, and FIGS. 13 to 14 show a state of first and second molds 410a, 410b being attached and closed.

As shown in FIGS. 11 and 12, when the mold driving unit 428 operates in a state where there is a gap between the first and second molds 410a, 410b, the rotating part 429 rotates.

The first connecting link part 429a rotates into the A-1 direction (downward direction) by the rotation of the rotating part 429, and the second connecting link part 429b rotates into the A-2 direction (upward direction).

The first connecting plate 431a moves toward the second mold 410b (B-1 direction) by the A-1 direction movement, and the first moving block 430a connected to the first connecting plate 431a and the first mold 410a connected to the first moving block 430a moves in the direction of the second mold 410b.

Meanwhile, the second connecting plate 431b moves into the direction of the first mold 410a (B-2 direction) by the A-2 direction movement, and the second moving block 430b connected to the second connecting plate 431b and the second mold 410b connected to the second moving block 430b moves into the direction of the first mold 410a.

By this way, the first mold 410a and the second mold 410b are connected to each other, and the cavity 411 is formed in a cylindrical shape in between.

In this state, the support block 427 behind the first moving block 430a moves into the direction of the first moving block 430a, and the fixing bar 433 fixed to the supporting block 427 moves forward to penetrate the insertion hole 430b-1 in the second moving block 430b.

Drive force transmission elements consisting of a rack and a pinion for converting the rotational movement of the mold driving unit 428 into the forward or backward movement of the support block 472 are placed between the support block 427 and the mold driving unit 428.

The first locking unit 433a at the end of the fixing bar 433 is coupled to the second locking unit 451d, 452d provided in the locking device 450.

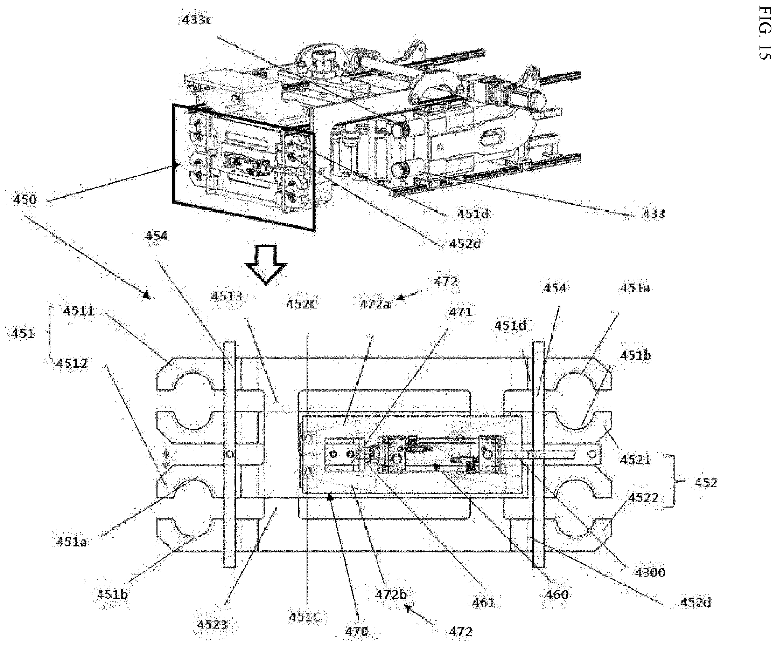

As shown in FIG. 15, a locking device 450 is provided behind the second moving block.

As described above, when the first and second molds 410a, 410b are connected together, the locking device is connected to the first locking unit 433a at the end of the fixing bar 433 to prevent the fixing bar from being deviated so that the state can be stably maintained.

The specific configuration of the locking device 450 is as follows.

It comprises an upper hanger 451 with a plurality of first locking grooves 451a formed to be concave upward and a lower hanger 452 with a plurality of second locking grooves formed to be concave downward and partially overlapped with the upper hanger 451.

The interval between the upper hanger 451 and the lower hanger 452 is controlled by the operation of an actuator 470 to be described later.

By this way, the first locking groove 451a and the second locking groove 452a can be selectively locked to the first locking unit 433a by being spaced apart or stuck.

The upper hanger 451 includes a first upper hanger 4511, a second upper hanger 4512 spaced downward therefrom, and a connecting bar 4513 connecting them.

The lower hanger 452 comprises a first lower hanger 4521, a second lower hanger 4522 spaced downward therefrom, and a connecting bar 4523 connecting them.

The first upper hanger 4511 is placed to face the first lower hanger 4521 in a vertical direction so as to be connected or spaced apart from each other.

The second upper hanger 4512 is placed to face the second lower hanger 4522 in a vertical direction so as to be connected to or spaced apart from each other.

A guide rod 454 is provided to traverse the upper hanger 451 and the lower hanger 452 in the vertical direction.

The guide rod 454 serves to guide the vertical movement when the upper hanger 451 and the lower hanger 452 operate in relative vertical movement.

The guide rod 454 is placed in a first accommodating groove 451b and a second accommodating groove 452b provided in the upper hanger 451 and the lower hanger 452.

The fixing stand 4300 is provided at the rear of the second moving block 430b, and the actuator 460 is fixed to the fixing stand 4300.

An operation bar 461 is provided with the actuator 460.

The operation bar 461 can be hidden by extending outwardly or moving inwardly of the actuator 461 with the operation of the actuator 460.

The actuator 460 is connected to a moving plate 470 which is placed outside the first lower hanger 4521 and the second upper hanger 4512.

Specifically, the end of the operation bar 461 is connected to the connection unit 471 provided on the moving plate 470.

Accordingly, when the operation bar 461 extends outward with the operation of the actuator 460, the moving plate 470 can move to the left in this FIG. 15.

In this state, the moving plate 470 can move to the right in FIG. 15 when the operation bar 461 enters into the actuator 460.

The guide groove 472 in which some areas are formed to be inclined at the rear surface of the moving plate 470 is provided.

The guide groove 472 comprises an upward guide groove 472a and a downward guide groove 472b.

The upward guide groove 472a and the downward guide groove 472b can be constituted in plural in left and right directions.

The interval between the upward guide groove 472a and the downward guide groove 472b is formed to be wider from one side to the other side.

The first lower hanger 4521 is fitted into the upward guide groove 472a and the first insertion part 452c in which the position change relative to the upward guide groove 472a may occur is provided.

On the other hand, the second upper hanger 4512 is fitted into the downward guide groove 472b and the second insertion part 451c in which the position change relative to the downward guide groove 472b may occur is provided.

On the inner surface of the first locking groove 451a and the second locking groove 452a), second locking portions 451d,452d are provided in a concave and convex form that can be locked by the first locking unit 433a provided with the fixing bar 433.

Now the operation of the locking device 450 according to a spaced or connected state between the first mold 410a and the second mold 410b will be described.

When the first mold 410a and the second mold 410b are spaced apart from each other as much as possible, the upper hanger 451 and the lower hanger 452 are spaced apart from each other. Accordingly, the first locking groove 451a and the second locking groove 452a are also spaced apart.

In this state, the gap between the first lower hanger 4541 and the second upper hanger 4512 is minimized.

The first insertion part 452c is placed at one end (a left end in FIG. 15) of the upward guide groove 472a, and the second insertion part 451c is at one end of the downward guide groove 472b) (a left end in FIG. 15).

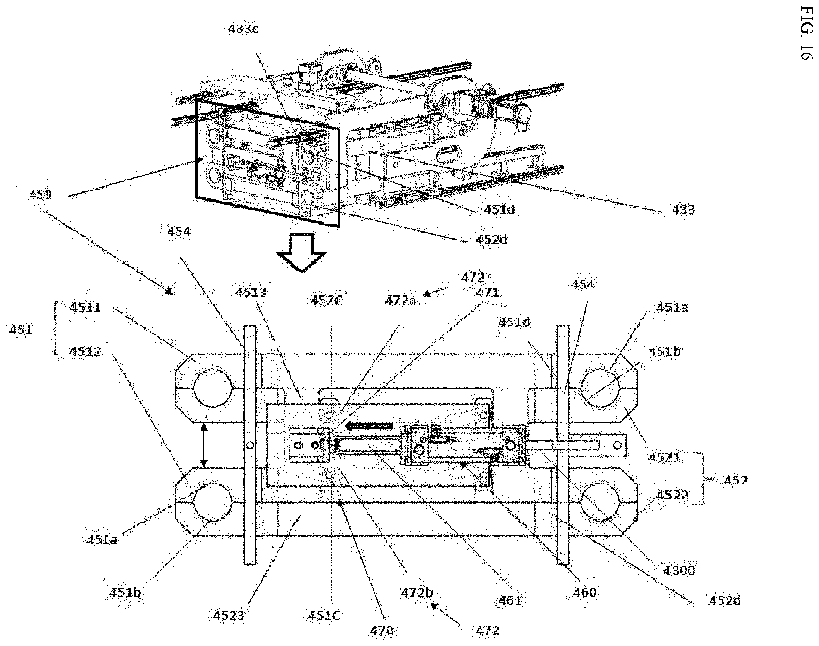

As shown in FIG. 16, when the first mold 410a and the second mold 410b are closed, they are fixed to the support block 427. The fixing bar 433, one end of which protrudes from the first moving block 430a, penetrates the penetration hole 430b-1 in the second moving block 430b due to the movement of the support block 427.

The first locking unit 433a at the end thereof is placed between the first locking groove 451a and the second locking groove 452a of the locking device.

In this state, the actuator 460 operates so that the operation bar 461 extends in one direction (left direction).

This moves the moving plate 470 in one direction (left direction).

As the moving plate 470 moves, the upward guide groove 472a and the downward guide groove 472b formed in the moving plate 470 also move in one direction (left direction).

The first insertion part 452c and the second insertion part 451c fitted into the upper guide groove 472a and the lower guide groove 472b do not move in a horizontal direction because they are fixed to the upper support 451 and the lower support 452, respectively.

However, relative positions within the upward guide groove 472a and the downward guide groove 472b moving in one direction (left direction) are changed.

The first insertion part 452c inserted into the upward guide groove 472a moves upward by the guide of the upward guide groove 472a, and the second insertion part 451c inserted into the downward guide groove 472b moves downward by the guide of the guide groove 472b.

Accordingly, the upper support 451 moves downward, and the lower support 452 moves upward.

This brings the first upper support 4511 into contact with the first lower support 4511, and the second upper support 4512 into contact with the second lower support 4522.

The first locking groove 451a and the second locking groove 452a meet to form a circular hole, and surround the first locking unit 433a of a penetration hole 433.

As described above in detail, the second locking units 451d, 452d with a concave and convex form are formed on the inner circumferential surface of the first locking groove 451a and the inner circumferential surface of the second locking groove 452a, which is implemented in a form that engages with the first locking unit 433a.

By such engagement, the fixing bar 433 locked by the locking device 450 is prevented from being separated or moved.

As the support block 427 supports the rear of the first moving block 430a, if the fixing bar 433 fails to move, the support block 427 cannot move, and accordingly, the first moving block 430a cannot move either.

Accordingly, the first and second moving blocks 430a, 430b between the locking device 450 and the support block 433 and the closed arrangement of the first and second molds 410a, 410b closed between the first and second moving blocks 430a, 430b can be stably maintained.

In order for the gap between the first and second molds 410a, 410b to be widened after the container molding is completed, it is just necessary to move the operation bar 461 in the other direction (right direction) by the operation of the actuator 460 and pull the moving plate 470.

Then, the first insertion part 452c at the top of the upward guide groove 472a moves downward, and the second insertion part 451c at the bottom of the downward guide groove 472b moves upward.

As a result, the gap between the upper hanger 451 and the lower hanger 452 is widened, and the lock between the first locking unit 433a and the second locking unit 451d, 452d is released.

In this state, the mold driving unit 428 operates to increase the distance between the first moving block 430a and the second moving block 430b, and accordingly, the gap between the first mold 410a and the second mold 410b is widened.

As shown in FIG. 17, the inlet support 920, which is moved by the circulation line (not shown), is located between the separated molds 410 while supporting the heated pre-form PF.

The pre-form may be located between the separated mold cavities 411.

On the other hand, the upper part closing part 460 for closing the upper part of the cavity 411 is installed at the upper part of the mold 410.

The shape of the bottom surface of the upper part closing part 460 becomes the shape corresponding to the bottom surface of the container to be finally manufactured.

In the present invention, the upper and lower parts of the cavity 411 of the mold 410 are open, and the upper part closing part 460 is provided to close the opened upper part.

Meanwhile, the lower part of the cavity 411 of the mold 410 is closed by an inlet support unit 920.

The vacuum suction part (not shown) is provided at the cavity 411 of the mold 410. When the label L is supplied into the cavity 411 by the label supply unit 500 to be described later, the vacuum suction part adsorbs the label L so that it can be fixed to the inner surface of the cavity 411.

As shown in FIGS. 9 and 10, an arrangement space 423 in which the label supply unit 500 can be placed is formed in the housing frame 420 of the container forming unit 400.

When the label supply unit 500 is installed in the arrangement space 423, the label supply unit 500 and the container forming unit 400 are placed in the directions that cross each other.

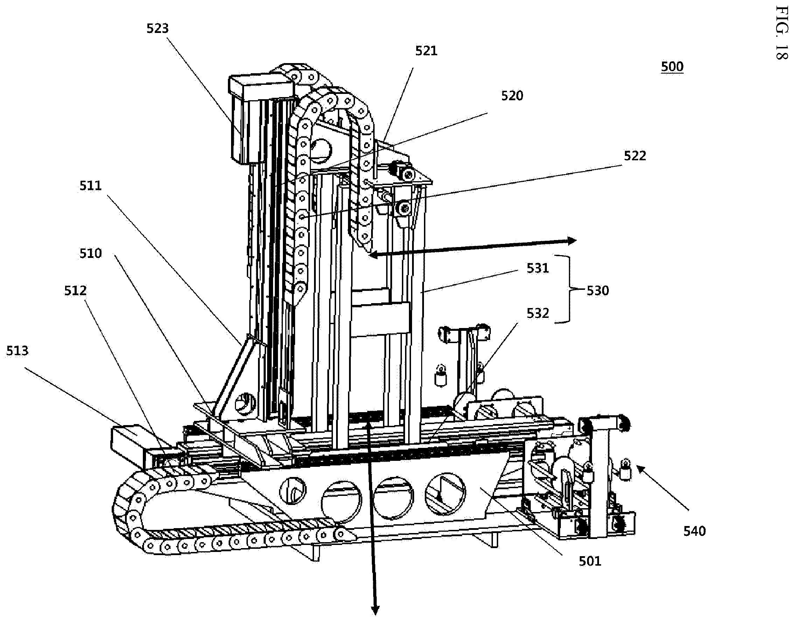

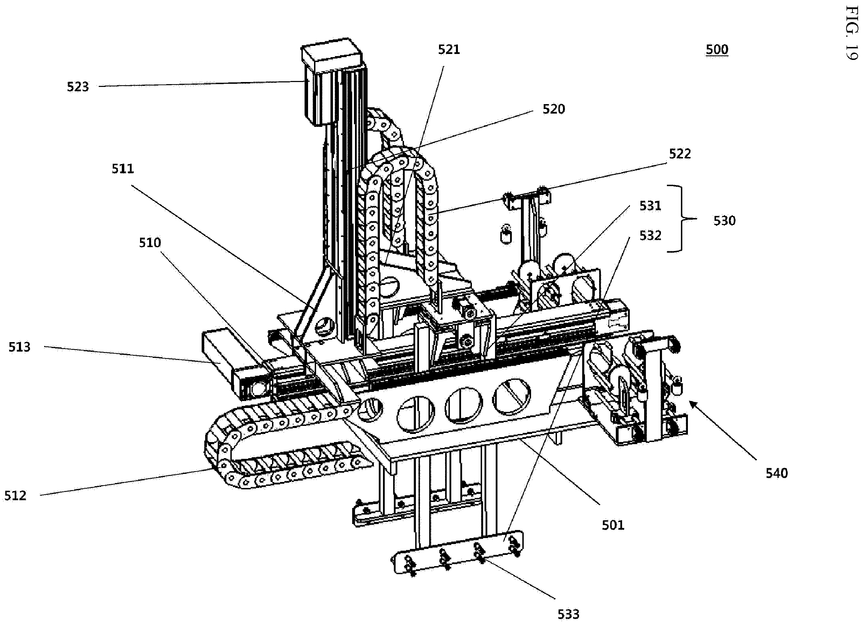

As shown in FIGS. 18 and 19, the label supply unit 500 comprises a main frame 501, a first moving guide unit 510 provided along the horizontal direction in the main frame 501, and a first moving unit 511 in the first moving guide unit 510 that can move in the horizontal direction or the front and rear direction along the first moving guide unit 510.

The first moving unit 511 is provided in a form of the frame shape, and the first moving unit 511 and the main frame 501 are connected by the first protective device 512 that can be bent freely while accommodating an electric line or communication line.

Therefore, even when the first moving unit 511 moves horizontally along the first moving guide unit 510, the first protective device 512 is bent along with the first moving unit 511 to protect the electric wire or the communication line.

The first moving actuator 513 is provided behind the first moving guide unit 510, which is connected to the first moving unit 511 to move the first moving unit 511.

Meanwhile, a second moving guide unit 520 formed in the vertical direction is installed in the first moving unit 511.

A second moving guide unit 521 is provided in the second moving guide unit 520, which can move in the vertical direction along the second moving guide unit 520.

The second moving unit 521 is also provided in a form of frame, and the first moving unit 511 and the second moving unit 521 are connected to the second protective device 522 that can be bent freely while accommodating the electric line or communication line.

Therefore, even when the second moving unit 521 moves up and down along the second moving guide unit 520, the second protective device 522 is bent along the second moving unit 521 to protect the wire or the communication line.

A second moving actuator 523 is provided in second moving guide unit 520, which is connected to the second moving unit 521 to move the second moving unit 521 in the vertical direction.

A label supply arm 530 is placed in the vertical direction in the second moving unit 521.

The label supply arm 530 comprises an arm frame 531 and a label support unit 532 provided at the lower end of the arm frame 531 to adsorb or attach and support the label.

The label supply arms 530 are placed spaced apart from each other on both sides of the second moving unit 521.

The label support unit 532 is provided with a plurality of adsorption parts 533 or an attachment unit. Preferably, the label support unit 532 supports the label by vacuum adsorption method.

The gaps between the left and right of the adsorption parts 533 or the attachment parts correspond to the gaps between the molds 410.

That is, it is desirable that each adsorption unit 533 or the attachment part faces the inner surface of the container cavity 411.

Meanwhile, a label storage unit 540 is provided at the end of the main frame 501.

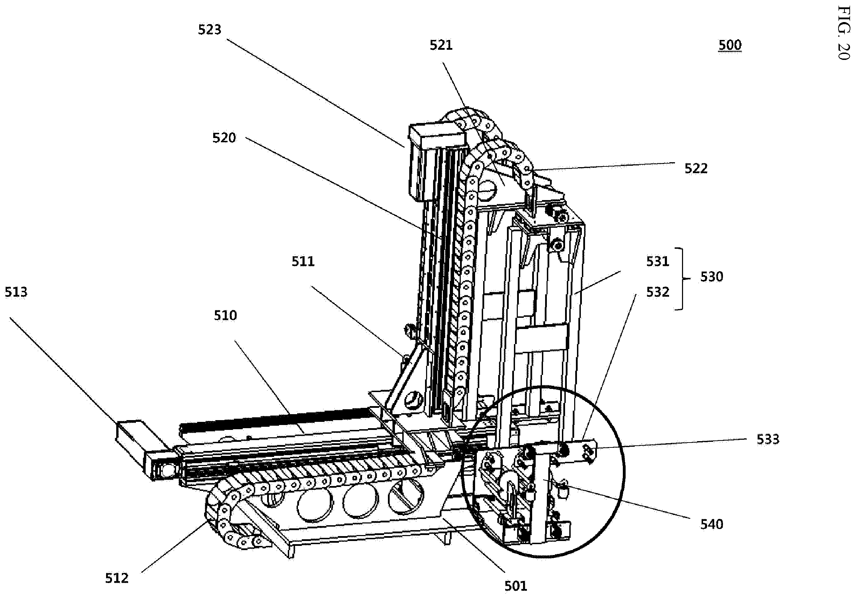

As shown in FIG. 20, the first moving unit 511 can move along the first moving guide unit 510 to the label storage unit 540.

In this state, the label support unit 532 of the label supply arm 530 is placed toward the label storage unit 540 when the second moving unit 521 is raised upward most.

When vacuum adsorption force is formed in the adsorption unit 533 provided in the label support unit 532, the label in the label storage unit 540 moves to the adsorption unit 533 and is attached thereto.

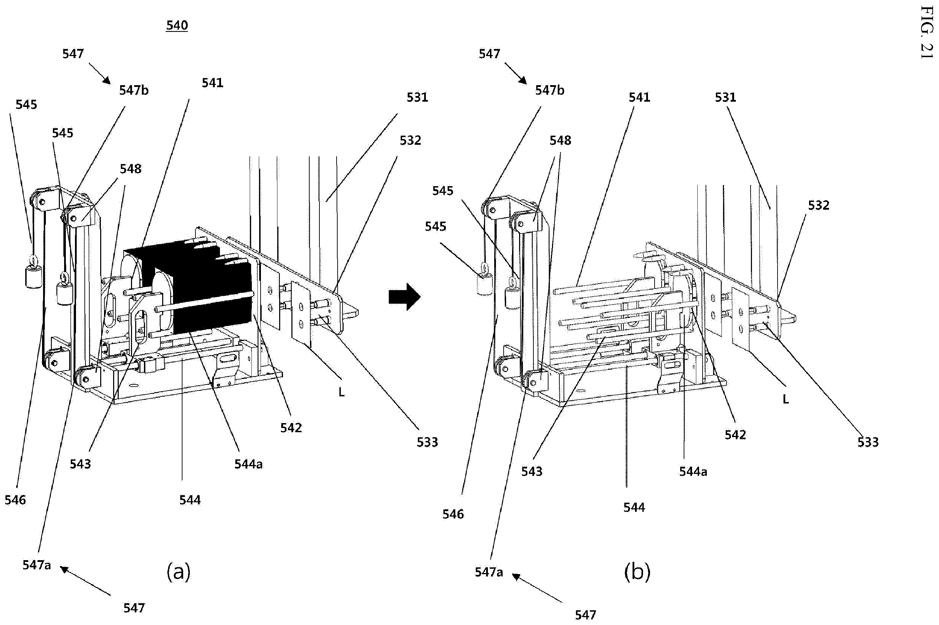

As shown in FIG. 21, the label storage unit 540 comprises a storage frame 541 for storing the label, a discharge hole 542 formed in the storage frame 541 to form the opening through which the label can escape, and a push device 543 to push the label accommodated in the storage frame 541 toward the discharge hole 542.

A guide unit 544 is provided inside the storage frame 541 so that the push device 543 can linearly move, and the push device 543 is mounted on the guide unit 544 to allow slide movement.

The push device 544 is provided with a push plate 544a to push the label more effectively.

Accordingly, while the label is accommodated between the push plate 544a and the discharge hole 542, and the push plate 544a pushes the label bundle toward the discharge hole 542), the vacuum adsorption pressure is formed in the adsorption unit 533 of the label support unit 532. And then the label L in the label storage unit 540 can be moved to the adsorption unit 533.

The connection line 546 connected to the push device 544 and the weight 545 connected to the end of the connection line 546 are further included to enable the push device 544 to push the label L.

The connection line 546 is connected to the front of the push device 544 and extends up to the discharge hole 542 and is bent down to the pulley 547 placed behind the push device 543.

The pulley 547 is composed of the lower pulley 547a and the upper pulley 547b, which are supported by the support bracket 548.

The connection line 546 passing through the lower pulley 547a is connected to the weight 545 past the upper pulley 547b.

When the weight 545 is about to descend by gravity, the connection line 546 pulls the push device 543 in the direction of the discharge hole 543, which enables the label L to move into the direction of discharge hole 542.

The process for supplying the label L to the mold cavity 411 of the container forming unit 400 is as follows.

As shown in FIG. 18, in a state where the first moving unit 511 retreats as much as possible and the second moving unit 521 is raised as much as possible, the first moving unit 511 moves forward following the first moving guide 510 to the label storage unit 540. And then, it becomes to a state as shown in FIG. 20.

In this state, if the vacuum adsorption state is formed in the adsorption unit 533, the label in the label storage unit 540 moves to the adsorption unit 533, and is stably attached thereto (*see* FIG. 21(a)).

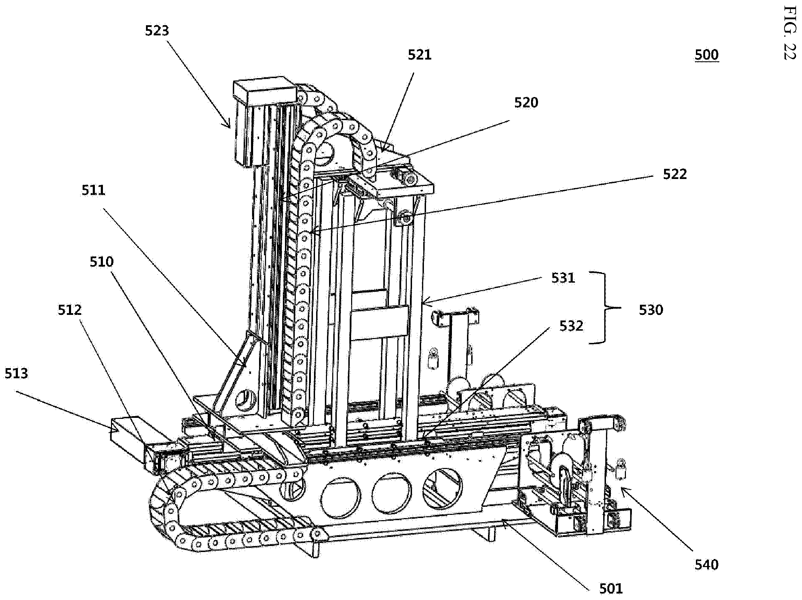

When the adsorption of the label is completed, the first moving unit 511 retreats and returns to a state as shown in FIG. 22.

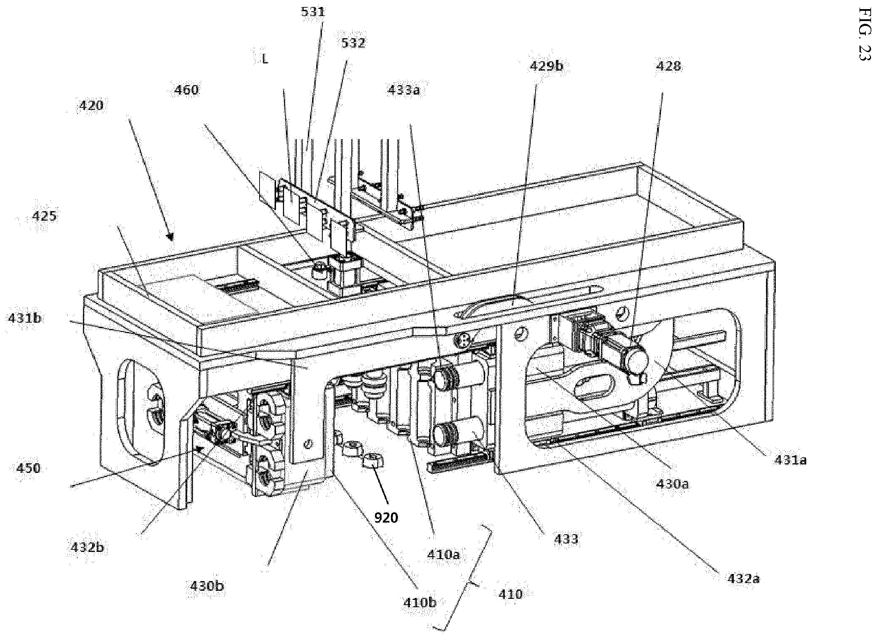

FIG. 23 illustrates only the adsorption unit 533 in the label supply unit 500, and the other parts are omitted. It a diagram illustrating a state where the label L is attached to the adsorption unit 533, ready to be attached to the inside of the cavity 411 of the first and second molds 410a, 410b.

To this end, the first and second molds 410a, 410b are kept spaced apart from each other, and the inlet support part 920 is located in between. The circulation line is omitted here.

The pre-form (not shown) is positioned at the inlet support unit 920.

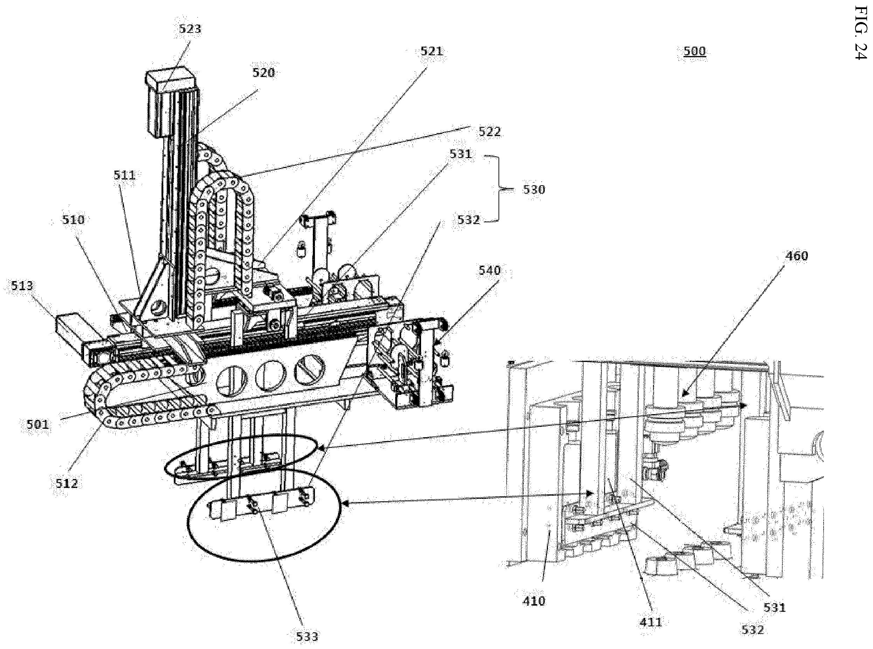

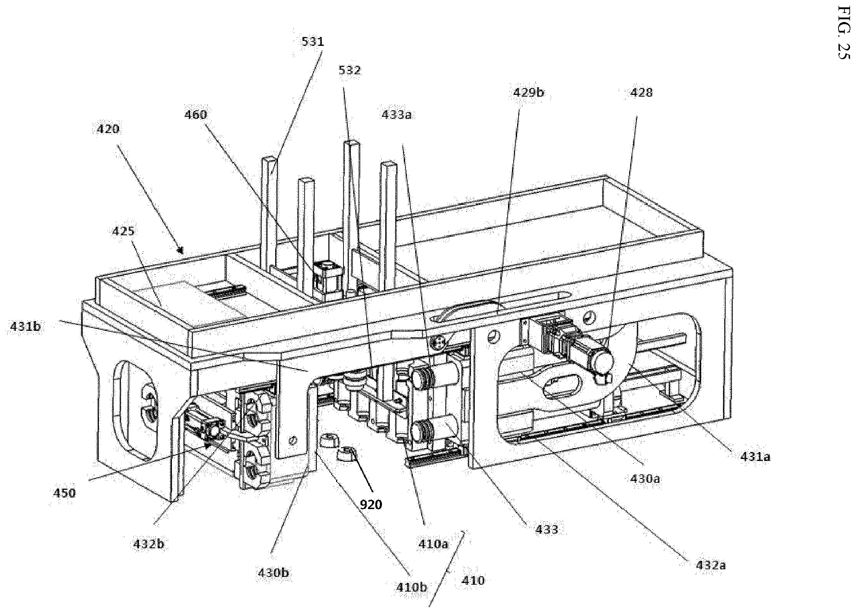

In this state, as shown in FIG. 24 and 25, the second moving unit 521 descends along the second moving guide 520.

In this case, the label supply arm 530 is lowered, and in particular, the label support unit 532 at the bottom of the label supply arm 530 is opposed to the cavity inner surface of the mold 410.

That is, as shown in FIG. 24 and 25, each label support unit 532 faces the inner surface of the cavity 411 of each mold 410 which is separated from each other.

The interval between the label support unit 532 or the interval left and right between the arm frame 531 is desirable to be provided corresponding to the maximum separation interval of the separated mold 410.

According to other conventional technology, the adsorption unit protrudes from the label support unit again to move the label to the inner surface of the cavity. However, the present invention enables the label to be positioned close to the inner surface of the cavity 411 by the lowering itself.

When the label L is attached to the inner surface of the cavity 411, the label no longer remains in the adsorption unit 533 of the label support unit 532.

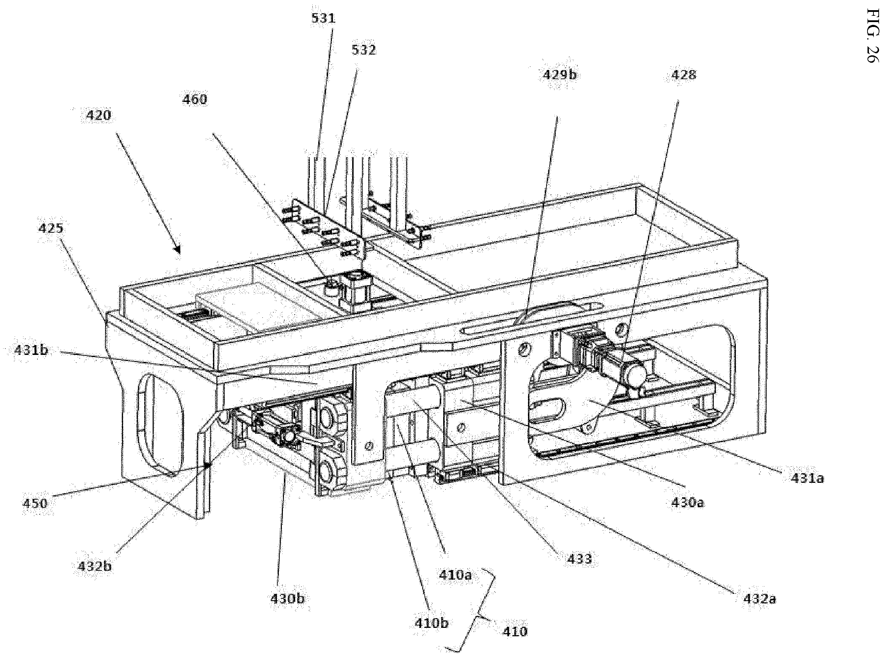

In this state, the label support unit 532 is raised above the mold 410 as shown in FIG. 26.

Then, the first and second molds 410a, 410b to which the labels are attached and separated from each other are attached to each other to accommodate the pre-form PF, closing the cavity 411.

Since the moving and closing processes between the first and second molds 410a, 410b have been described in detail above, further description thereof will be omitted.

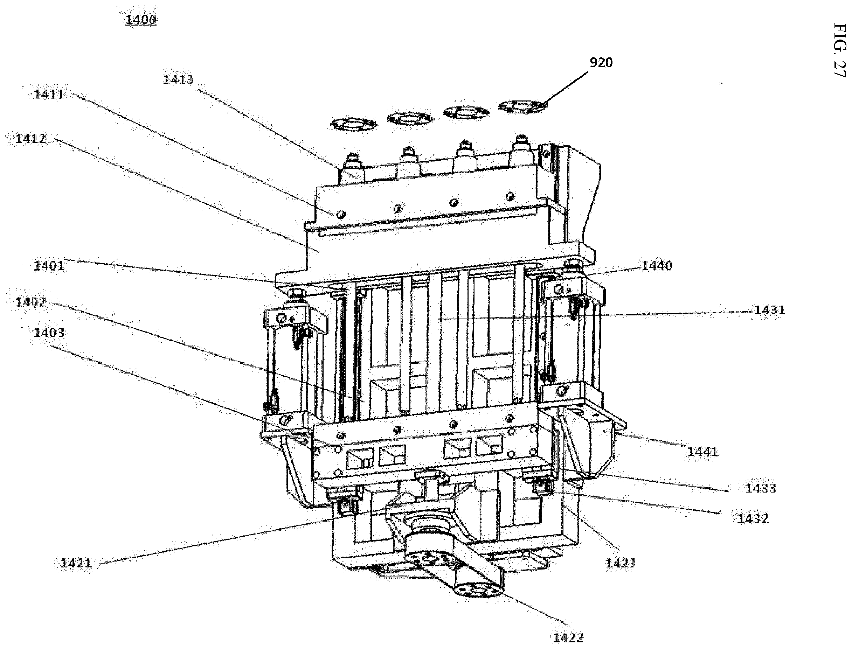

As shown in FIG. 27, an air supply unit 1400 is provided under the mold 410 to supply air to the pre-form PF to expand the pre-form PF.

The inlet support unit 920 supporting the pre-form PF under the mold is located below the space between the molds 410. Here, only the bottom surface of the inlet support unit 920 is shown.

An air supply unit 1400 is provided under the inlet support unit 900.

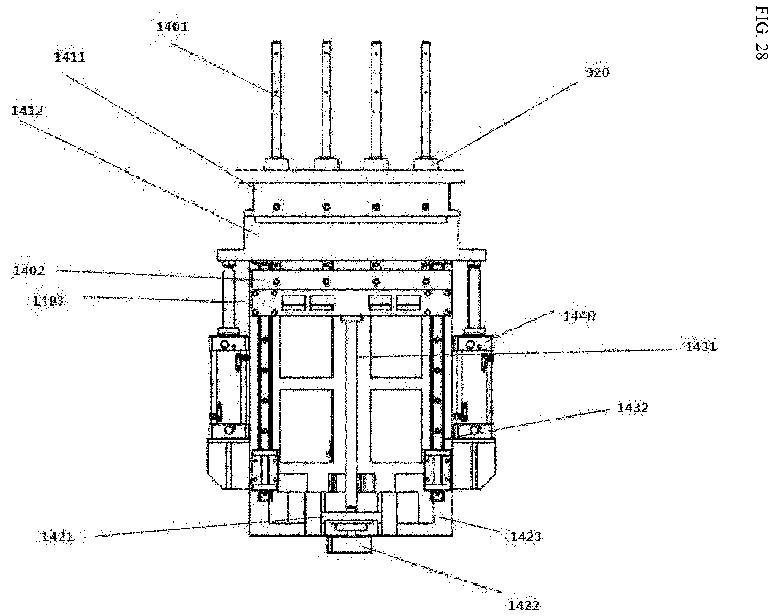

As shown in FIGS. 27 and 28, an air supply unit 1400 is provided in a form of a pipe or tube or straw or pot and includes a plurality of air supply pipes 1401 for discharging air on its outer circumferential surface.

The air supply pipe 1401 is supported by a supply pipe support block 1402, and a support block board 1403 is provided below the support block 1402.

Meanwhile, the air supply unit 1400 includes a first upper guide block 1411 through which the air supply pipe 1401 passes and guide the vertical movement of the air supply pipe 1401, and a second guide block 1412 provided on the upper part of the first upper guide block 1411.

The air supply pipe 1401 is inserted and passes into the lower part of the penetration hole 921 of the support holder 920 of the lip plate 900 at the upper part of the second upper guide block 1412. The insertion guide unit 1413 is provided to allow the air supply pipe 1401 to stably enter the pre-form PF by penetrating the penetration hole 921 of support holder 920.

A base frame 1421 is provided under the support block board 1403, and a first lifting actuator 1422 capable of lifting up and down the supply pipe support block 1402 and the support block board 1403 is provided in the base frame 1421.

The base frame 1421 is fixed to the lower part of the lifting guide block 1423.

A lifting guide bar 1431 is provided between the base frame 1421 and the second upper guide block 1412.

The lifting guide bar 1431 serves to guide the lifting motion of the supply pipe support block 1402 and the support block board 1403 between the base frame 1421 and the second upper guide block 1412.

It is possible that the lifting guide bar 1431 becomes a screw member, the supply pipe support block 1402 coupled to the lifting guide bar 1431 and the support block board 1403 become a kind of screw engaging member to rotate the lifting guide bar 1431, enabling the supply pipe support block 1402 and the support block board to move vertically.

On the other hand, the guide rail 1432 is placed in an up-and-down direction so that the supply pipe support block 1402 and the support block board 1403 can stably move up and down. The supply pipe support block 1402 and the support block board 1403 are provided with a moving block 1433 that is coupled to the guide rail 1432 and capable of sliding movement.

Side frames 1441 supporting the second lifting actuators 1440 are provided on both sides of the lifting guide block 1423.

A second lifting actuator 1440 is provided between the side frame 1441 and the second upper guide block 1412 to lift or lower the second upper guide block 1412.

The side frame 1441 is provided with a guide bar 1442 extending upwards.

The guide bar 1442 provided in the side frame 1441 is placed to penetrate through the second upper guide block 1423.

Guide pipes 1443 are provided at both sides of the second upper guide block 1412, and the guide bar 1442 of the side frame 1441 is placed to pass through the guide pipe 1443.

As shown in FIG. 27, the supply pipe support block 1402 and the support block board 1403 are located directly above the base frame 1421 before the air supply pipe 1401 enters the support holder 920 and the pre-form PF of the lip plate 900 of the inlet support 900.

That is, they are located in the lowest end of the lifting guide bar 1431.

In addition, the second actuator 1440 also does not operate, and the first and second upper guide blocks 1411, 1412 are also positioned at the lowest positions.

By this way, the first upper guide block 1411 and the lower surface of the inlet support 900 are spaced apart from each other.

As shown in FIG. 28, the supply pipe support block 1402 and the support block board 1403 are lifted up by the movement of the first actuator 1422, and the first and second upper guide blocks 1411, 1412 are lifted up by the movement of the second actuator 1440.

In this case, the upper surface of the first upper guide block 1411 is attached to the lower surface of the inlet support 900.

The air supply pipe 1401 passes through the first and second upper guide blocks 1411, 1412 and the support holder 920 of the inlet support 900 to be exposed upward as much as possible.

By this way, the exposed air supply pipe 1401 enters the inner space of the pre-form.

The arrangement state of an air supply unit 1400 as shown in FIG. 28 is made in a state in which the label L is attached to the molds 410 spaced apart from each other, the molds 410 are attached to each other, and the upper part of the cavity 411 of the molds 410 is closed by the upper closing part 460 (*see* FIG. 26).

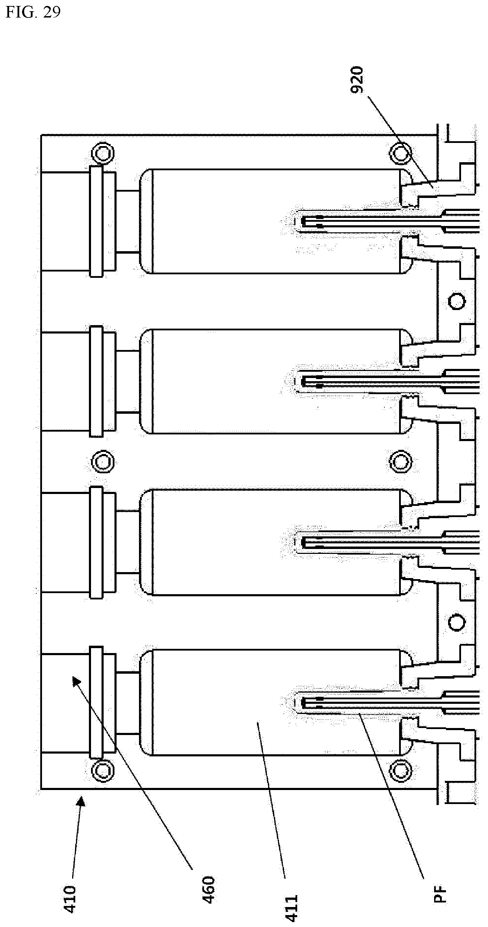

The schematic state is shown in FIG. 29 where the molds 410 are attached and the cavity 411 is closed by the upper closing part 460 and the support holder 920 of the inlet support 900.

In FIG. 29(c) and FIG. 29(d), the pre-form PF is accommodated in the cavity 411 in a state of being supported upside down by the support holder 920.

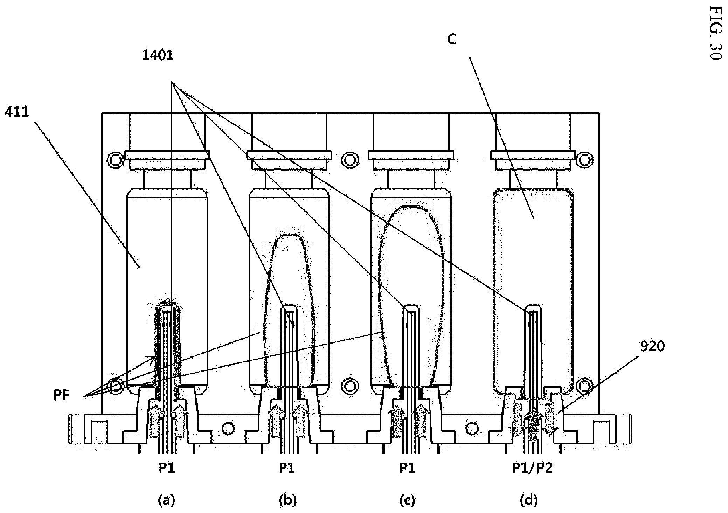

FIG. 30 a diagram illustrating the process in which the pre-form PF is formed into the container C with three-dimensional shape by the lifting movement and the air supply function of an air supply unit 1400 in this state.

FIGS. 29(a) to 29(d), FIG. 30(a), and FIG. 30(d) show the manufacturing process of a container (pressure vessel) which is formed with three-dimensional shape and provided with an in-mold label according to the present invention.

As shown in FIG. 29(a), the molds 410a, 410b for forming the shape of the pressure vessel are spaced apart from each other.

It is necessary to heat the molds 410a, 410b through hot water or a heater, and the arrow T circulated by the dotted line in FIGS. 29 to 30 illustrates the heating state.

Though it will be explained later in detail why the molds 410a, 410b should be heated, it is for the label to adhere better to the container and to keep the attached state firmly and stably.

A three-dimensional groove 411a for forming three-dimensional shape is formed on the inner surface of any one of the cavities of the molds.

When the label L is attached to the molds 410a, 410b, an adsorption passage 411b for vacuum adsorption of the label L is formed.

In a state in which the molds 410a, 410b are opened, the label supply arm 530 of the label supply device 500 on the molds 410a, 410b is lowered to move the label L into the molds 410a, 410b.

The label supply arm 530 of the label supply unit 500 is provided with a pipe 533 that is elastically movable in the horizontal direction (or moves in a telescopic multistage manner).

The pipe 533 also has the vacuum adsorption force to make the label L attached to the pipe 533.

In this state, when the pipe 533 moves inside each mold, the label L attached to the pipe 533 is attached to the inside of the molds 410a, 410b.

When the label L is attached to the inner surfaces of the molds 410a, 410b by the vacuum adsorption pressure, the vacuum pressure on the inner surface of the pipe 533 is released.

When the pipe 533 returns to its original state in this state, the label L remains attached to the inner surface of the cavity.

Since the label L is a two-dimensional plane, the label L does not enter the inner surface of the three-dimensional groove 411a and is in a state of covering the three-dimensional groove 411a.

In this state, the pre-form PF enters between the opened molds 410a, 410b in a state in which the pre-form PF is placed upside down on the support holder 920 of the inlet support 900.

Wherein the pre-form PF may be the pre-form of PE, PET, etc. but it is desirable to consist of PET pre-form.

An upper closing part 460 is placed on the upper part of the molds 410a, 410b for forming a bottom surface of the container later.

As shown in FIG. 29(c), the molds 410a, 410b are closed, and the upper closing part 460 also seals the upper parts of the molds 410a, 410b.

In this state, the lower parts of the molds 410a, 410b are closed by the inlet support 900.

In this state, for the blowing operation to expand the pre-form PF, the air supply port 1400a of the air injection device enters the lower part of the inlet support 900, and is placed on the inlet side of the pre-form PF. The pipe 1401 of the air injection device for supplying air to cool the container after the container expansion is completed enters from the lower part of the inlet support 900 and enters inside the pre-form PF.

The air supply port 1400a of the air injection device is placed above the air injection device 1400, and the air flow path through which air can move is provided in the air injection device 1400 to communicate with the air supply port 1400a, and the air communication hole 1400b is provided outside the injection device 1400 to communicate with the flow path.

Accordingly, when a hose (not shown) connected to the device for supplying compressed air like a compressor (not shown) provided outside, is connected to the communication hole 1400b and air is supplied, the air moves through the flow path provided inside the air supply device 1400 and is discharged toward the air supply port 1400a.

The pipe 1401 of the air injection device is placed to penetrate the air supply port 1400a in the vertical direction.

The pipe 1401 of the air injection device is provided to move upward or downward by the separate actuator (not shown) and the rising or falling speed is also adjustable.

A plurality of discharge holes 1401a through which air can be discharged are formed on the outer circumferential surface of the pipe 1401 of the air injection device.

When the air is injected into the air supply port 1400a of the air injection device in this state, as shown in FIG. 29(d), the pre-form PF is expanded and formed into the shape of the inner surface of the cavity of the molds 410a, 410b.

Hereinafter, the process in which the pre-form PF is expanded to be molded into the container and the labeling process in the container molding process will be described in detail.

As shown in FIG. 29(c), the air supply port 1400a is raised to be placed at the inlet side of the pre-form PF. Meanwhile, the pipe 1401 of the air injection device is also raised and inserted into the inlet of the pre-form PF.

As it rises in that state, the air is injected as indicated by A, and is introduced into the communication hole 1400b, is discharged from the air supply port 1400a, and is introduced into the pre-form PF to expand the pre-form PF.

The air discharged from the air supply port 1400a enters the space between the inlet of the pre-form PF and the pipe 1401.

The route (communication hole 1400b -> the air supply port 1400a -> the space between the inlet of the pre-form PF and the pipe 1401 -> inside the pre-form PF) where air moves to expand the pre-form as above will be defined as the first route.

The air to be injected is desirable to be supplied at room temperature or in a heated state.

The pressure of the air injected in the vessel expansion process should be in the first pressure range (e.g., 1.5 - 2.0 MPa). This is the pressure range in which the surface does not tear or be damaged while the pre-form expands at an appropriate rate.

However, the pressure range may be changed without being limited to such example.

As shown in FIG. 30(a), the air is injected through the air supply port 1400a, the pre-form PF expands through the blowing and rises up with the pipe 1401 of the air supply.

At this time, the upper end of the air supply pipe 1401 can help the expansion and extension by pushing up the inner surface of the pre-form PF.

By this way, the pre-form PF is molded into the container shape according to the inner surface shape of the mold as shown in FIG. 30(b).

As described above, the three-dimensional groove 411a is formed in the molds 410a. 410b, and the three-dimensional shape can be formed in the container to match the shape of the three-dimensional groove 411a.

When a part of the surface of the pre-form PF moves toward the three-dimensional groove 411a, the part of the surface presses the label L covering the three-dimensional groove 411a, and fits the label L into the shape of the three-dimensional groove 411a.

As such, the label L attached to the inner surfaces of the molds 410a, 410b is attached to the surface of the container in the process of molding the container.

An adhesive layer is formed on the inner surface of the label L, and since the adhesive layer can be melted and adhered at a certain temperature (e.g., 50 ° C) or higher, when label L is in close contact with the surface of the pre-form PF, it melts and is firmly fixed to the surface of the container due to the surface temperature of the pre-form PF and the temperature of the molds 410a, 410b.

The concave-convex three-dimensional shape on the surface of the container are formed by the three-dimensional groove 411a, and the three-dimensional shapes are covered by the label L to give the pressure vessel a geometrical, visual three-dimensional shape feature with the label L.

The pre-form is in close contact with the molds 410a, 410b to be formed and molded into the container shape, and air is injected at a pressure in the second pressure range higher than the first pressure range into the container (marked as B) in a state that the label is attached. Only the range of pressure is increased and the route through which air moves is the same as the first route.

The temperature of the injected air is maintained at room temperature or in a heated state (e.g., 40 to 90 ° C).

This is to make the container shape itself, or the three-dimensional shape, or the specific shape of the end of the three-dimensional shape more certain after the expansion of the pre-form PF is made to some extent, as well as to make the label well adhered to the surface of the container, especially the surface on which the three-dimensional shape is formed.

Here, the second pressure range is preferably to be the pressure range higher (e.g., 2.5 to 4.0 MPa (25 to 40 bar)) than the first pressure range (e.g., 1.5 to 2.0 MPa (15 to 20 bar)). However, the pressure range can be changed without being limited to such examples.

Afterwards, as shown in FIG. 30(c), it is necessary to inject the cooled air through the pipe 1401 of the air injection device to cool the container.

Here, the air is introduced into the container through the pipe 1401 of the air injection device to cool the container, and then exits into the space between the inlet of the container and the pipe 1401 of the air injection device. This route is defined as the second route, indicated as C.

If the mold is immediately opened after the container is formed, the container shrinks due to the difference between the air temperature and the temperature of the container, which causes defects such as deformation and deviation of the container. The label also can be separated from the container.

However, if the mold is cooled while waiting within the mold for a certain time to compensate for this problem, the productivity may be reduced and the label may not be properly attached to the container if the mold itself is cooled.

In order to overcome this weakness, the cooling air may be supplied to the inside of the molded container and discharged to maximize the productivity of the container.

In this case, the injection pressure of the cooling air is preferably 1.5 to 4.0 Mpa (15 to 40 bar), but the present invention allows to adjust, without being limited thereto and the temperature of the air may be room temperature air or cooler air.

It is desirable to maintain the surface temperature of the molds 410a, 410b to be 40 to 80 ° C so that the adhesive layer can be easily fused and the label L can be firmly attached to the surface of the container 100 during the container molding process as shown in FIGS. 29 and 30.

To this end, it is desirable that the heating is maintained as indicated by T in the molds 410a, 410b, as shown in FIGS. 29 and 30.

However, this temperature can be adjusted according to a situation beyond the above temperature range.

The material constituting the pressure vessel of the present invention is plastic resin. Particularly, PET material suitable for pressure vessels is preferred.

However, in the case of the pre-form made of PET, the surface temperature is 90 - 100 °C in which the surface latent heat is not high. In particular, it is remarkable that the surface latent heat is low compared to 180 - 200 °C of the surface temperature of pre-forms made of PE.

Therefore, when the container is molded using the PET pre-form, it is insufficient to make the labeling completely solid with the latent heat of the PET pre-form only because the latent heat is low.

Therefore, as described above, it is necessary to heat the molds 410a, 410b separately so that labeling can be performed well.

For this, in the present invention, by introducing the process of heating the mold rather than cooling the molds 410a, 410b to compensate for the low latent heat of the PET pre-form, the label can be better attached to the surface of the container and the three-dimensional shape formed on the surface of the container and the state of adhesion is firm.

However, when the mold is heated in this way, there is a problem that hinders the cooling the container, so the process injecting the cooling air through the pipe 1401 of the air injection device indicated by C in FIG. 30(c) is introduced.

After the cooling air is injected into the container, the cooling air can cool the container and then exit between the container inlet and the pipe 1401.

As such, the molds 410a, 410b are heated to enable the label to be firmly attached to the container while injecting cooling air into the container, thereby increasing the cooling rate of the container and increasing the production speed of the labeled container.

After the cooling process for the container is completed, as shown in FIG. 30(d), followed by lowering the pipe 1401 of the air injection device, the molds 410a, 410b are opened, and the container with the labeling and cooling completed is withdrawn.

The molding completed container is transferred into the direction of the container withdrawal unit 610 by the rotation of the circulation line while being supported upside down by the support holder 920 of the inlet support 900.

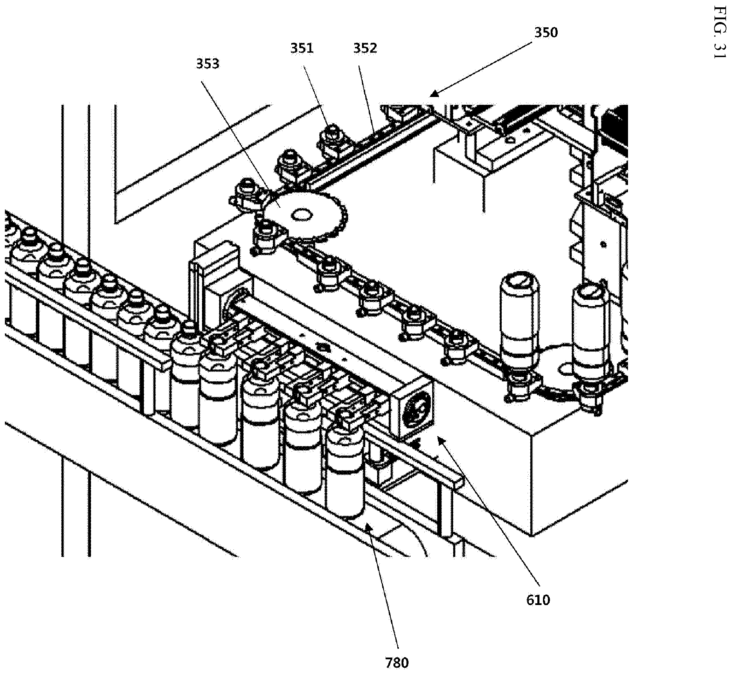

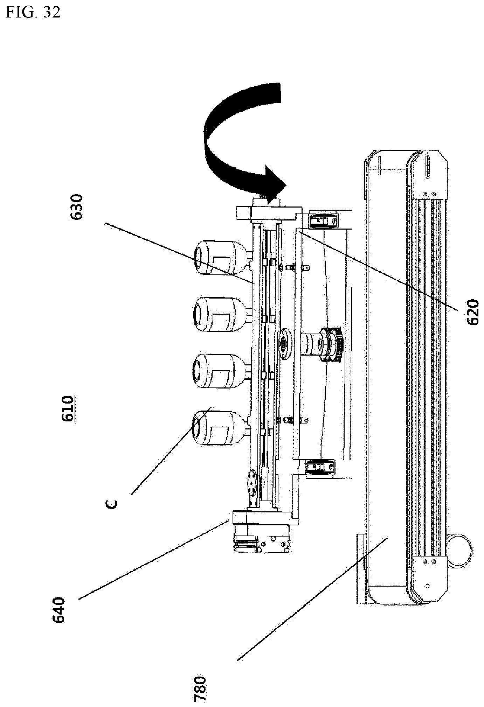

As shown in FIGS. 31 and 32, a conveyor belt 780 for carrying out the container is provided next to the container withdrawal unit 610. Boxes may also be placed instead of the conveyor belt.

In brief, the configuration of the container withdrawal unit 610 comprises a moving module 620 capable of forward and backward movement and rotational movement with respect to the container, a gripper 630 provided to the moving module 620 to selectively hold the container, and a rotating actuator 640 rotating the container held by the gripper 630 into the direction of the conveyor belt by rotating the moving module 620.

Here, a plurality of grippers 630 are provided, and each gripper 630 includes a pair of sticks 631. The gripper 630 can be adjusted in the interval.

Accordingly, when the interval between the grippers 630 is narrowed, the gripper 630 may hold the neck of the container C, and when the interval between the grippers 630 is increased, the holding state is released.

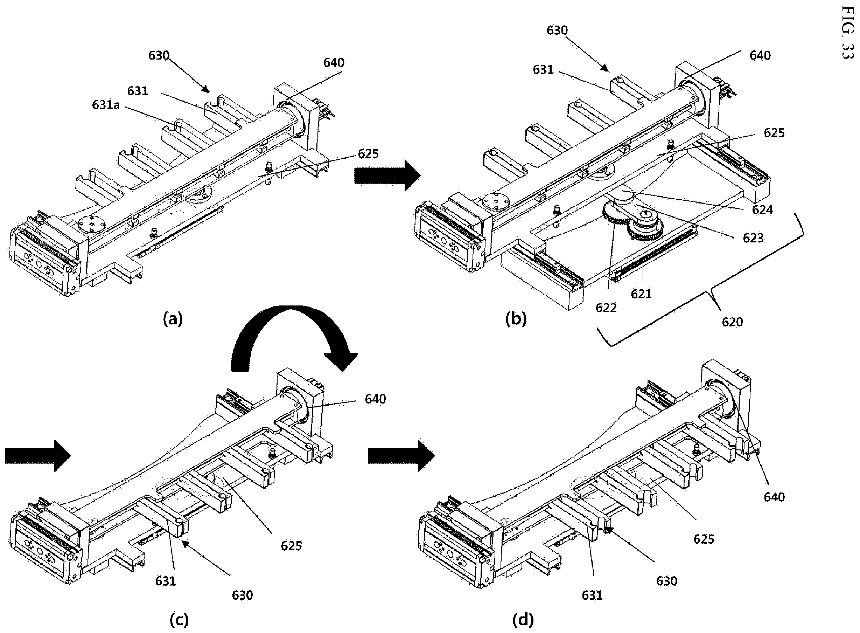

As shown in FIG. 33(a), the gripper 630 approaches the container (not shown) in a state where the interval between the sticks 631 of the gripper 630 is widened among the container withdrawal unit 610.

The groove 631a corresponding to the outer circumferential surface of the neck portion of the container C is formed on the inner surface of the stick 631.

Therefore, when the interval between the sticks 631 is narrowed, the neck portion of the container (not shown)) can be positioned in the groove 631a and be stably held.

As shown in FIG. 33(b), the gripper 620 moves into the container direction by a moving module 620 which moves the gripper 620 of the container withdrawal unit 610 into the container direction.

The moving module 620 comprises a main gear 621 connected to the drive motor, a driven gear 622 engaging with the main gear 621, a first link 623 connected to the main gear 621, and a second link 624 which is rotatably connected to the first link 623, rotatably connected to the rotational axis of the driven gear 622, and connected to the moving plate 625 on which the gripper 630 is located is located.

The first link 623 is preferably fixed to the main gear 621, and is rotatably placed on the rotation axis of the driven gear 622.

The second link 624 is rotatably connected to the rotation axis of the driven gear 622 and the moving plate 625.

Therefore, when the main gear 621 rotates clockwise in a state of FIG. 51, the first link 623 also rotates clockwise.

The position of the driven gear 622 moves clockwise along the outer circumferential surface of the main gear 621.

As a result, the folded first link 623 and the second link 624 are unfolded, and the moving plate 625 moves into the container direction.

When the groove 631c of the gripper 630 is located at the neck portion of the container, the container is gripped by the gripper 630 while the width of the gripper 630 is narrowed.

Here, the structure of narrowing the width of the gripper 630 is implemented by the configuration (belt or rack) capable of moving the other sticks in a system while fixing any one of the pair of sticks 631 constituting each gripper 630 and by the drive motor for driving this configuration.

In this state, the moving device 620 including the gripper 630 holding the container C retreats.

The retreat can be in the reverse direction of the unfolding operation shown in FIG. 33(b).

That is, when the main gear 621 rotates counterclockwise in a state of FIG. 33(b), the first link 623 also rotates counterclockwise.

Accordingly, the position of the driven gear 622 moves counterclockwise along the outer circumferential surface of the main gear 621.

As a result, the unfolded first link 623 and second link 624 are folded, and the moving plate 625 retreats accordingly.

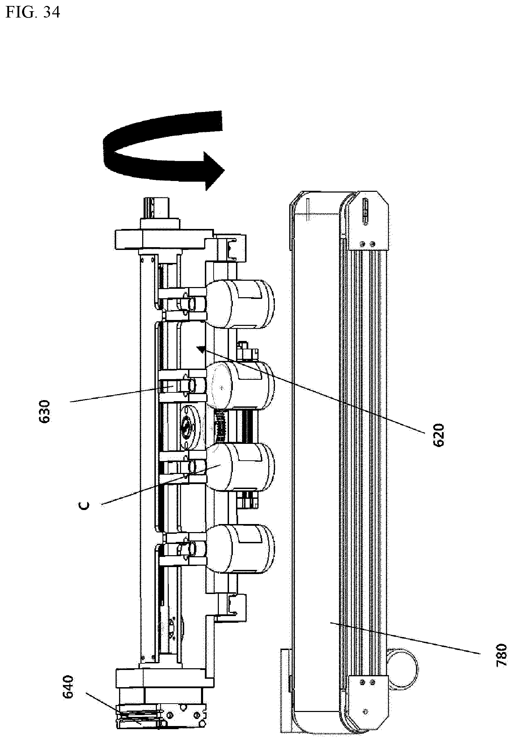

In this state, as shown in FIG. 33(c), when the rotary actuator 640 operates, the gripper 630 rotates backward, and as shown in FIGS. 33(d) and 34, the container C standing upside down can be placed upright on the conveyor belt 750 by the gripper 630, and then withdrawn to the outside.

In brief, it can be summarized as below.

FIG. 33(a) illustrates a state where the gripper 630 is located at the rearmost position with a gap between the grippers 630 (the state before holding the container).

FIG. 33(b) illustrates a state where the gripper 630 is positioned near the neck of the container by moving forward to the forefront by the moving module, and holding the neck of the container by narrowing the interval in this state (the state of gripping the container).

FIG. 33(c) illustrates a state in which the gripper 630 retreats while holding the container and is bent 180 degrees backward. That is, FIG. 33(c) illustrating a state of just before putting the container on the conveyor belt.

FIG. 33(d) illustrates that the gripper 630 is in a state where the container can no longer be held as the interval of the gripper 630 increases, and in this case, the container is withdrawn to the outside through the conveyor belt.

According to the present invention as described above, it is possible to quickly produce the containers in large quantity by supplying lots of pre-forms PF prepared in advance.

Here, the pre-form PF is not placed upward as in the conventional technology, but is downward, and the inlet support unit 920 is not placed above the pre-form PF but below the pre-form PF.

In particular, the position of the pre-form, in which its inlet faces up, is reversed by the first and second rotary transfer devices so that its inlet faces down.

Meanwhile, the pre-form PF, after completing the heating, is moved to the transfer unit for molding the container by the pre-form discharge unit, and is moved to the container forming unit 400 again.

Here, before the pre-form PF is molded into the container, the label supply unit 500 supplies the label L to the mold 410 in the vertical direction. And then, in a state where the pre-form PF is accommodated inside the mold 410, the pre-form PF is expanded by an air supply unit 1400 so that the label L is attached while being changed into the shape of the container.

While the container is molded, the container can be quickly cooled because it supplies not only the hot air for expansion but also the cooling air for cooling.

After molding the three-dimensional container with the in-mold labeled is completed, the container C is moved by the transfer unit for molding the container and then withdrawn by the container withdrawal unit 610 to the outside.

The process can be repeated over and over again to make in-mold label containers.

However, the present invention can be applied not only to the in-mold label container, but also to manufacturing general containers, not the in-mold label container.

While this invention has been particularly shown and described with reference to exemplary embodiments thereof, it will be understood by those skilled in the art that various changes in form and details may be made therein without departing from the spirit and scope of the invention as defined by the appended claims.

Therefore, the scope of the invention is defined by the appended claims.

## Claims

1. An apparatus for manufacturing container having three-dimensional shape, comprising:
a pre-form supply unit for supplying the pre-form manufactured in advance;
a pre-form heating unit for heating the pre-form discharged and transferred from the pre-form supply unit;
a pre-form discharge unit for discharging, to the outside, the heated pre-form having passed through the pre-form heating unit;
a transfer unit for forming a container for transmitting the pre-form discharged from the pre-form discharge unit;
a container forming unit, through which the transfer unit for forming a container passes, having a mold which provides an exterior of the container having three-dimensional shape when the heated pre-form transferred by the transfer unit for forming a container expands;
an air supply unit, which is provided adjacent to the container forming unit, for providing air to the pre-form accommodated in the mold so that the pre-form expands;
a label supply unit, which is provided adjacent to the container forming unit, for supplying a label for in-mold labeling to an inside of the mold provided in the container forming unit; and
a container withdrawal unit, which is provided adjacent to the container forming unit, for withdrawing, to an adjacent region, the container discharged and transferred from the container forming unit by the transfer unit for forming a container.

2. The apparatus of Claim 1, wherein the pre-form supply unit comprises:
a bucket unit for accommodating the pre-form manufactured outside;
a first transfer unit for supplying the pre-form, which is connected to the bucket unit, for transferring upwardly the pre-form supply unit accommodated in the bucket unit;
a second transfer unit for supplying the pre-form, which is provided adjacent to the first transfer unit for supplying the pre-form, for transferring the pre-form to the pre-form heating unit;
a first rotary transfer unit, which is rotatably provided at a discharge unit of the second transfer unit for supplying the pre-form, having a space unit into which the pre-form is fitted; and
a second rotary transfer unit, which is provided adjacent to the first rotary part, for transferring the pre-form transferred by the first rotary transfer unit into a direction of the pre-form heating unit.

3. The apparatus of Claim 2, wherein the pre-form heating unit comprises a heater;
wherein the apparatus further comprises a transfer unit for the pre-form heating unit, which passes between the pre-form heating unit;
wherein the second rotary transfer unit is disposed next to the transfer unit for heating the pre-form; and
wherein the pre-form discharged from the second rotary transfer unit is transferred by the transfer unit for the pre-form heating unit and transferred and heated by the pre-form heating unit, and then passes the pre-form heating unit and moves to a direction of the pre-form discharge unit.

4. The apparatus of Claim 3, wherein the transfer unit for the pre-form heating unit is provided inside the pre-form heating unit, next to the second rotary transfer unit, and in a form of circulating while passing through the pre-from discharge unit; and
wherein the transfer unit for the pre-form heating unit is provided in a separate and independent form to be distinguished from the transfer unit for forming a container.

5. The apparatus of Claim 3, wherein the pre-form discharge unit is provided between the transfer unit for the pre-form heating unit and the transfer unit for forming a container; and
the pre-form discharge unit further comprises:
a pre-form holding unit for holding the pre-form displaced in the transfer unit for the pre-form heating unit; and
a guide unit for guiding the pre-form held by the pre-form holding unit into a direction of the transfer unit for forming a container.

6. The apparatus of Claim 5, wherein the guide unit is provided in plural, and
wherein a distance between the guide units is widened from the transfer unit for the pre-form heating unit to the transfer unit for forming a container.

7. The apparatus of Claim 1, wherein the transfer unit for forming a container is provided next to the pre-form discharge unit, and in a form of circulating while passing through the container forming unit and the container withdrawal unit; and
wherein the transfer unit for forming a container is provided in a separate and independent form to be distinguished from the transfer unit for the pre-form heating unit.

8. The apparatus of Claim 1, wherein the transfer unit for the pre-form heating unit comprises a pre-form inlet support unit for allowing an inlet of the pre-form to be displaced downward.

9. The apparatus of Claim 1, wherein the transfer unit for forming a container comprises an inlet support unit for allowing an inlet of the pre-form and an inlet of a container to be displaced downward, the inlet support unit having an opening for supplying air from the air supply unit.

10. The apparatus of Claim 2, wherein the first transfer unit for supplying the pre-form comprises a first housing formed upwardly and a conveyor belt, which is provided in the first housing, having a protruding support unit on which the pre-form can be mounted; and
wherein the second transfer unit for supplying the pre-form comprises:
a second housing, which is disposed under a discharge unit of the first housing, extending into a direction of the pre-form heating unit;
a guide rail, which is provided at a discharge unit of the second housing, extending downward into a direction of the first rotary transfer unit; and
a rotating device, which is provided to be rotatable in the second housing, for transferring the pre-form into a direction of the guide rail.
